# EUROPEAN PATENT SPECIFICATION

(11) **EP 4 556 448 B1**
(45) Date of publication and mention of the grant of the patent: **15.04.2026**
(21) Application number: 24212770.2
(22) Date of filing: 13.11.2024
(51) Int. Cl.: C04B 2/12

(54) **DECARBONATION PROCESS OF CARBONATED MATERIALS IN A MULTI-SHAFT VERTICAL KILN**
ENTKARBONISIERUNGSVERFAHREN VON KOHLENSTOFFHALTIGEN MATERIALIEN IN EINEM VERTIKALEN MEHRWELLENOFEN
PROCÉDÉ DE DÉCARBONATATION DE MATÉRIAUX CARBONÉS DANS UN FOUR VERTICAL À ARBRES MULTIPLES

(30) Priority: 14.11.2023 EP 23209830
(43) Date of publication of application: 21.05.2025
(73) Proprietor: Carmeuse Technologies SA, 1348 Louvain-la-Neuve (BE)
(72) Inventor: AUBERT, Alex, 1083 GANSHOREN (BE); GUTHRIE, Steven Bruce, 5020 MALONNE (BE); VAN DE BERG, Marie-Laure, 1000 BRUSSELS (BE)
(74) Representative: AWA Benelux

(56) References cited:
- WO-A1-2022/238387

## Description

### Technical Field

The present invention relates to a decarbonation process of carbonated materials and to a multi-shaft vertical kiln, in particular a three-shaft vertical kiln, for carrying out said process, as well as system comprising the multi-shaft vertical kiln and at least one CO₂ separation unit.

### Background Art

The increasing concentration of carbon dioxide in the atmosphere is recognized as one of the causes of global warming, which is one of the greatest concerns of present days. This increase is largely owed to human actions and particularly to the combustion of carbon-containing fossil fuel, for instance for transportation, household heating, power generation, etc., and in energy-intensive industries such as steel, cement and lime manufacturing.

Within the lime-production process, natural limestone (mainly composed of calcium carbonate) is heated to a temperature above 910°C in order to cause its calcination into quicklime (calcium oxide) and carbon dioxide according to the following reversible reaction:

CaCO₃ ↔ CaO + CO₂ ΔH = 178 kJ/mol: Equation 1

Calcium oxide is considered as one of the most important raw materials and is used in a multitude of applications such as steel manufacturing, construction, agriculture, flue gas and water treatment as well as in glass, paper and food industry. The global annual production is estimated to be above 250 million tons.

As indicated in Equation 1, CO₂ is a co-product of the lime-production process meaning that approximately 760 to 790 kg of CO₂ is unavoidably generated when producing 1 ton of lime. Moreover, the heat required for heating limestone and for conducting the reaction is usually provided by the combustion of a carbonaceous fuel, which results in additional production of CO₂ (ranging between 200 and more than 700 kg per ton of lime depending on the nature of the fuel and efficiency of the kiln).

The use of vertical shaft kiln prevails in the lime industry as they are particularly suitable for the production of lumpy quicklime compared to other types of furnaces, such as rotary kiln, and because they have the advantage of lower specific energy input.

In a single-shaft vertical kiln, limestone or dolomitic limestone is fed through the top of the shaft and the produced lime is discharged at its bottom. In the pre-heating zone, the limestone is heated by hot gases flowing upward from the combustion zone. In the combustion zone, heat is produced through the direct firing of a fuel to reach a temperature above 910°C and consequently causing the decomposition of the limestone into quicklime and CO₂. The lime then enters the cooling zone where it is cooled by air fed from the bottom of the shaft. The produced lime is finally discharged, ground and sieved into the desired particle size. Flue gas leaves the shaft at the top of the pre-heating zone and is fed to a filter system before it is vented to the atmosphere. Specific energy consumption for such single-shaft vertical kilns ranges between 4 and 5 GJ per ton of lime.

Parallel-flow regenerative kilns (PFRK) are a variant of vertical shafts that are considered as the best-available technology for lime production with design capacity up to 800 tons per day. They consist in vertical shafts (usually 2 or 3) connected by a cross-over channel. Each shaft operates alternately according to a defined sequence. Initially, fuel is burnt in one of the shafts ("in combustion") with combustion air flowing downwards ("parallel flow" with the limestone). Hot gases are then transferred to the other shafts ("in regeneration") through the cross-over channel in order to pre-heat limestone in said other shafts. A reversal between combustion and regeneration shafts typically occurs every 15 minutes.

This operational mode enables optimal recovery of the heat contained in product and hot gases bringing the specific energy consumption down to 3.6 GJ per ton of lime. The combustion of the fuels required to bring this heat results in the production of approximately 200 kg of CO₂ per ton of lime when natural gas is used.

The lime industry is making efforts for reducing its CO₂ emissions by improving energy efficiency (including investment in more efficient kilns), using lower-carbon energy sources (e.g., replacing coal by natural gas or biomass) or supplying lime plants with renewable electricity. The CO₂ related to energy can thus be reduced to some extent. Nevertheless, none of these actions impacts the CO₂ which is inherently produced during decarbonation of limestone.

A route for further reducing emission consists in capturing CO₂ from the lime kiln flue gas for permanent sequestration (typically in underground geological formation) or recycling for further usage (e.g., for the production of synthetic fuels). Those processes are known under the generic term CCUS (Carbon Capture, Utilization and Storage).

Combustion air used in conventional lime kilns contains approximately 79 vol% nitrogen resulting in CO₂ concentration in flue gas not higher than 15-25 vol%. Additional measures are thus required to obtain a CO₂ stream that is sufficiently concentrated to be compatible with transportation, sequestration and/or utilization.

Several technologies have been investigated for concentrating the CO₂ stream such as the ones disclosed in WO2022238385A and WO2022238387A.

### Aims of the Invention

The invention aims to provide a solution to overcome at least one drawback of the teachings provided by the prior art.

In particular, the present invention aims to increase the CO₂ concentration of the fumes to optimize CO₂ Capture, Utilization and Storage.

For the above purpose, the invention is directed to a decarbonation process for carbonated materials, in particular carbonated minerals, preferably limestones and/or dolomitic limestones, in a multi-shaft vertical kiln, in particular a three-shaft vertical kiln, comprising a first, a second and a third shaft with preheating zones, heating zones and cooling zones and a cross-over channel between each shaft, alternately heating carbonated materials by a combustion of at least one fuel with at least one comburent up to a temperature range in which carbon dioxide of the carbonated materials is released, the combustion of the fuel and the decarbonation generating an exhaust gas, wherein in an alternating cycle, the first shaft is in an combustion mode, the second shaft is in a regeneration mode and the third shaft is in a cooling mode, wherein in the regeneration mode, the carbonated materials in the second shaft are heated with a first portion of the exhaust gas generated in the first shaft being in the combustion mode and transferred from the first shaft to the second shaft via the cross-over channel connecting the first and second shaft, and an exhaust gas stream exits the second shaft via an aperture, opening in the second shaft and fluidly connected to an exhaust passage assembly, wherein in the cooling mode, the decarbonated materials are cooled in the cooling zone of the third shaft with a cooling stream comprising dioxygen, wherein an effluent stream composed of:
- a portion of the cooling stream,
- a second portion of the exhaust gas generated in the first shaft transferred from the first shaft to the third shaft via the cross-over channel connecting the first and third shaft and
- CO₂ resulting from the decarbonation of the carbonated materials in the third shaft, whose temperature lies in the temperature range,
exits the third shaft via an aperture, opening in said shaft, wherein at least a portion of the effluent stream is recirculated in the first shaft via a comburant recirculation passage assembly, as one or more of the at least one comburent.

According to specific embodiments of the invention, the decarbonation process for carbonated materials comprises one or more of the following steps or technical features, taken in isolation, or any combination thereof:
- enriching the at least a portion of the effluent stream exiting the third shaft in dioxygen before feeding the first shaft with said stream and/or supplying the first shaft with dioxygen via an oxygen supply port opening in said shaft, preferably said port being arranged in an upper end portion of said kiln;
- the cooling stream is composed of air or dioxygen enriched air, wherein said stream comprises at least 20% of dioxygen, preferably at least 22% of dioxygen, more preferably at least 30% of dioxygen, in particular at least 40% of dioxygen on a dry basis in volume;
- controlling the pressure and/or the flow rate in at least one of the second shaft and/or third shaft during the alternating cycle in order to control at least one of: the first portion of the exhaust gas transferred from the first shaft to the second shaft via the cross-over channel connecting the first and second shaft, the second portion of the exhaust gas transferred from the first shaft to the third shaft via the cross-over channel connecting the first and third shaft and/or a portion of the cooling stream transferred from the third shaft to the second shaft via the cross-over channel, preferably using at least one of:
   - a throttle valve located in the exhaust passage assembly,
   - a fan or a compressor located in the comburent passage assembly and/or
   - at least one of: one or more throttles , one or more fans and/or one or more compressors of a cooling supply system adapted to supply the cooling stream;
- a or the cooling supply system is adapted to control a cooling stream amount to be supplied in the third shaft during the alternating cycle, wherein a feeding of a cooling stream to be supplied in the first shaft is stopped during the alternating cycle or a cooling stream amount to be supplied in the first shaft, preferably consisting of air or a gas composition depleted in both O₂ and CO₂, in particular with O₂ lower 20% and CO₂ lower than 0,04% on a dry basis in volume, is controlled in such a manner that the cooling stream amount to be supplied in the first shaft does not exceed 18%, preferably 10%, in volume of the amount of the cooling stream to be supplied in the third shaft during the alternating cycle, optionally a feeding of a cooling stream to be supplied in the second shaft being stopped during the alternating cycle;
- providing a dampened exhaust gas stream with a reservoir fed with at least a portion of the exhaust gas stream exiting the second shaft during the alternating cycle or in an alternating subsequent cycle, and optionally cooling the at least one portion of the exhaust gas stream in a first cooling unit, in particular a first condenser, to form a cooled exhaust gas stream subsequently fed in the reservoir, preferably said cooled exhaust gas stream having a water content lower than 10% in volume;
- feeding at least one fuel lance of the second shaft during the alternating cycle with at least one of:
   - a first lance exhaust gas cooling stream formed with at least one of: another portion of the exhaust gas stream, a portion of the cooled exhaust gas stream and/or a portion of the dampened exhaust gas stream, or
   - a portion of the effluent stream;
- feeding at least one fuel lance of the third shaft with at least one of :
   - a second lance exhaust gas cooling stream formed with at least one of: a further portion of the exhaust gas stream, a further portion of the cooled exhaust gas stream and/or another portion of the dampened exhaust gas stream, or
   - a further portion of the effluent stream;
- cooling the effluent stream exiting the third shaft in a second cooling unit, in particular a second condensation unit;
- fluidly connecting the third shaft and the upstream end the comburent recirculation passage assembly during the alternating cycle via a distribution valve arrangement comprising at least one movable member allowing a fluid communication between either a first, a second or third end port, with at least one fourth end port, said first end port being in fluid communication with an downstream end of the comburent recirculation passage assembly, the second end port being in fluid communication with the exhaust passage assembly, the third end port being in fluid communication with an upstream end of the comburent recirculation passage assembly, the at least one fourth end port being in communication with the aperture in the third shaft;
- the alternating cycle is a first alternating cycle, and said process further comprises a second alternating cycle subsequent to said first alternating cycle and optionally a third alternating cycle subsequent to said second alternating cycle, wherein in said second alternating cycle, the first shaft is in the cooling mode, the second shaft is in the combustion mode, and the third shaft is in the regeneration mode, and wherein in said third alternating cycle, the first shaft is in the regeneration mode, the second shaft is in the cooling mode, and the third shaft is in the combustion mode;
- the at least a portion of exhaust gas exiting the exhaust passage assembly, the cooled exhaust gas stream exiting the first cooling unit or the dampened exhaust gas stream exiting the reservoir has at least one of:
   - a CO₂ content of between 40% to 60%, in particular between 45% to 55%, by volume on a dry basis and/or
   - a O₂ content lower than 4%, preferably lower than 3%, in particular lower than 2% by volume on a dry basis;
- purifying in CO₂ at least one of: the at least a portion of exhaust gas exiting the exhaust passage assembly, the cooled exhaust gas stream exiting the first cooling unit and/or the dampened exhaust gas stream exiting the reservoir, in at least one CO₂ separation unit, thereby forming a CO₂ depleted stream and CO₂ enriched stream, preferably having a content of CO₂ higher than or equal to 95% in volume on a dry basis, preferably the at least one CO₂ separation unit being selected from the group comprising a membrane separation unit, preferably a single stage membrane separation unit, cryogenic separation unit, a pressure swing absorption unit and/or an amine wash unit.

The invention is also directed to a multi-shaft vertical kiln comprising a first, a second, and a third shaft with preheating zones, heating zones and cooling zones and a cross-over channel between each shaft, said kiln being preferably adapted for carrying out the decarbonation process for carbonated materials, said kiln comprising:
- a cooling supply system for cooling one of the shafts, said shaft being in a cooling mode;
- a comburent recirculation passage assembly for transferring at least a portion of an effluent stream from the one of the shafts in the cooling mode to another one of the shafts, said shaft being in a combustion mode;
- optionally a recirculation fan or compressor arranged in the comburent recirculation passage assembly for circulating the at least a portion of the effluent stream;
- an exhaust passage assembly for discharging an exhaust gas stream from the remaining one of the shafts, said shaft being in a regeneration mode,
- wherein at least one shaft, preferably each shaft, is connected to a distribution valve arrangement, said arrangement comprising a distribution valve arrangement comprising at least one movable member allowing a fluid communication between either a first, a second or third end port, with at least one fourth end port, said first end port being in fluid communication with a downstream end of the comburent recirculation passage assembly, the second end port being in fluid communication with the exhaust passage assembly, the third end port being in fluid communication with an upstream end of the comburent recirculation passage assembly, the at least one fourth end port being in communication with at least one aperture opening in the corresponding shaft.

According to specific embodiments of the invention, the multi-shaft vertical kiln comprises one or more of the following technical features, taken in isolation, or any combination thereof:
- the distribution valve arrangement comprises either:
   - a 3-way valve assembly having an upstream port in fluid communication with one of the at least one aperture opening in the corresponding shaft, the second end port in fluid communication with the exhaust passage assembly and the third end port in fluid communication with the upstream end of the comburant recirculation passage assembly, wherein a movable member of the 3-way valve assembly allows a fluid communication between the upstream port and either said second end port or said third end port,
   - a dual-valve assembly comprising a first and a second 2-way valves, said valve assembly having a common upstream port in fluid communication with one of the at least one the aperture opening in the corresponding shaft, the second end port fluidly connected to said first 2-way valve and in fluid communication with the exhaust passage assembly and the third end port fluidly connected to said second 2-way valve and in fluid communication with the upstream end of the comburant recirculation passage assembly, wherein a first and second movable member in the first and the second 2-way valves, respectively, allow a fluid communication between the common upstream port and either said second end port or said third end port, or
   - a split-valve assembly comprising a first and a second 2-way valves, said assembly having a first upstream port and a second upstream port in fluid communication with a first and second of the at least one aperture opening in the corresponding shaft, the second end port fluidly connected to said first 2-way valve and in fluid communication with the exhaust passage assembly and the third end port fluidly connected to said second 2-way valve and in fluid communication with the upstream end of the comburant recirculation passage assembly, wherein a first and second movable member in the first and the second 2-way valves, respectively, allow a fluid communication between the first upstream port and said second end port while the fluid communication between the second upstream port and said third end port is closed, and vice versa;
- either:
   - the distribution valve arrangement further comprises a further 3-way valve having the at least one fourth end port in communication with the at least one aperture opening in the corresponding shaft, the first end port in fluid communication with the downstream end of the comburant recirculation passage assembly and a discharge port in fluid communication with the upstream port of the 3-way valve assembly or the common upstream port of the dual-valve assembly, wherein a movable member of the further 3-way valve allows a fluid communication between said fourth end port and either said first end port and said discharge port; or
   - the distribution valve arrangement further comprises a further 3-way valve (assembly), wherein an end port of said further 3-way valve (assembly) is fluidly connected to the at least one fourth end port, wherein a further end port of said further 3-way valve (assembly) is in fluid communication with the first end port, wherein the remaining port of said further 3-way valve (assembly) is in fluid communication with the upstream port of the 3-way valve assembly or the common upstream port of the dual-valve assembly, wherein a movable member of the further 3-way valve assembly allows a fluid communication between said fourth end port and either said first end port and said remaining port;
- at least one of a throttle valve disposed in the exhaust passage assembly and optionally a cooling unit, in particular a condensation unit, connected to said the exhaust passage assembly and fed with at least a portion of exhaust gas stream generated by said kiln, preferably said kiln further comprising a reservoir arranged downstream from said cooling unit and fed with a cooled exhaust gas stream exiting said cooling unit.

The invention is also related to a system comprising the multi-shaft vertical kiln and at least one CO₂ separation unit, wherein an upstream port of the at least one CO₂ separation unit is arranged downstream form at least one of: the exhaust passage assembly, the cooling unit and/or the reservoir, said CO₂ separation unit having a first downstream port for discharging CO₂ depleted stream, and a second downstream port for discharging CO₂ enriched stream, preferably the at least one CO₂ separation unit being selected from the group comprising a membrane separation unit, in particular a single stage membrane separation unit, cryogenic separation unit, a pressure swing absorption unit and/or an amine wash unit.

According to a specific embodiment of the invention, the system comprises the following technical feature:
- a further cooling unit, in particular a condenser, arranged upstream from or inside the at least one CO₂ separation unit and downstream from at least one of the exhaust passage assembly, the cooling unit and/or the reservoir.

The features of the invention allow for the recovery of almost all the emitted CO₂ during the decarbonation (>95%). They also enable the modification of existing three-shaft parallel flow kilns without requiring complete dismantling, thereby reusing most of the existing assets. These measures allow for retrofitting to achieve higher CO₂ concentration with limited adaptations to the existing three-shaft parallel flow kiln. Thanks to the measures of the invention, the additional injection amount of substantially pure O₂ is reduced compared to similar solutions using additional O₂ supply applied to two-shaft parallel flow kilns to achieve the same CO₂ concentration. Moreover, these measures result in a lower O₂ concentration in the fumes leaving the kiln, which is beneficial for a membrane separation unit and optionally a CO₂ Purification Unit (CPU) positioned downstream from the kiln. Compared to a kiln with a similar capacity, the final fume flow can be reduced by up to 5%. Furthermore, the overall capital expenditure (Capex) is reduced due to the use of a one-stage membrane concentration system and limited modifications to existing kilns.

### Brief Description of Drawings

Aspects of the invention will now be described in more details with reference to the appended drawings, wherein same reference numerals illustrate same features.

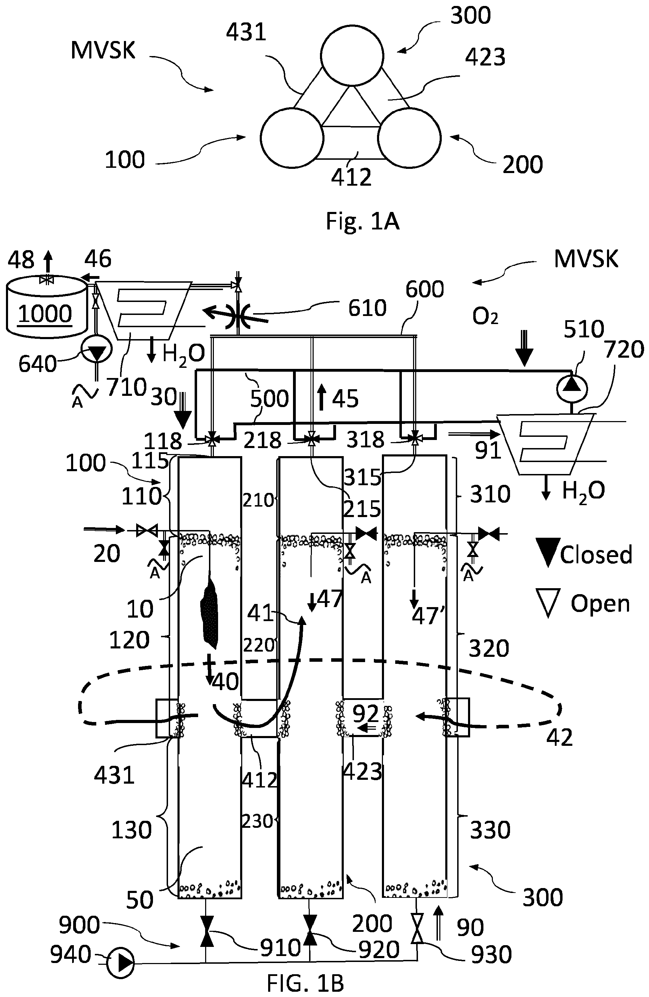

Figures 1A, 1B and 2 to 9 show the first to the seventh embodiments according to the invention.

### List of reference symbols

| | |
|---|---|
| 10 | Carbonated material |
| 20 | Fuel |
| 30 | Comburent |
| 40 | Exhaust gas (Combustion + decarbonation) |
| 41 | First portion of the exhaust gas transferred from the shaft in the combustion mode to the shaft in the regeneration mode |
| 42 | Second portion of the exhaust gas transferred from the shaft in combustion to the shaft in the cooling mode |
| 45 | Exhaust gas stream (e.g., exiting the shaft in the regeneration mode) |
| 46 | Cooled exhaust gas stream |
| 47,47' | Lance cooling exhaust gas stream |
| 48 | Dampened exhaust gas stream |
| 50 | Decarbonated material |
| 90 | Colling stream entering the shaft in the cooling mode |
| 91 | Effluent stream exiting the shaft in the cooling mode via a transfer channel |
| 92 | Colling stream via the transfer channel |
| 100, 200, 300 | First, second and third shaft |
| 110, 210, 310 | Preheating zone of the first, second and third shafts |
| 115, 215, 315 | Aperture of the first, second and third shafts |
| 118, 218, 318 | Distribution valve arrangement of the first, second and third shafts |
| 120, 220, 320 | Heating zone of the first, second and third shafts |
| 130, 230, 330 | Cooling zone of the first, second and third |
| 431, 412, 423 | Transfer channels |
| 500 | Comburant recirculation passage assembly |
| 510 | Recirculation fan or compressor (e.g., blower, root blower) |
| 520 | Fan or compressor (e.g., blower, root blower) for lance cooling |
| 530 | Filter (e.g., bag filter) |
| 600 | Exhaust passage assembly |
| 610 | Throttle valve |
| 630 | Filter (e.g., bag filter) |
| 640 | Fan or compressor (e.g., blower, root blower) for lance cooling |
| 710, 720 | Cooling units (e.g., condensation units) |
| 900 | Cooling supply system |
| 910, 920, 930 | Throttle valves of the cooling supply system |
| 940, 940.1, 940.2, 940.3 | Fan or compressor (e.g., blower, root blower) of the cooling supply system |
| 1000 | Reservoir/gas holder |
| 2000 | Membrane separation unit |
| MSVK | Multi-shaft-Vertical kiln (e.g., Three-shaft-Vertical kiln) |
| CPU | CO₂ purification unit |

### Detailed description

The present invention will now be described more fully hereinafter with reference to the accompanying drawings, in which embodiments of the invention are shown. This invention may however be embodied in many different forms and should not be construed as limited to the embodiments set forth herein; rather, these embodiments are provided for thoroughness and completeness.

Figure 1A and 1B describe a first embodiment of the invention allowing to reach 45 to 55% CO₂ (dry volume) concentration at an outlet the multi-shaft vertical kiln MSVK, also designated three-shaft vertical kiln in the description. Figure 1A shows a schematic top-down view of the multi-shaft vertical kiln MSVK, while Figure 1B shows a "unrolled" view of said kiln MSVK.

Before describing the technical features of the first embodiment, a review the operation of a traditional three-shaft kiln is herewith outlined. A traditional three-shaft kiln operates in a cyclical manner, with one of the three shafts working in the combustion mode while the other two, namely the second and third shafts, operate in the recovery mode. Both the flue gas (also known as exhaust gas) generated in the shaft in combustion and the cooling air supplied at its lower end are transferred to the other two shafts through transfer channels, in a balanced manner. This sequence repeats in a revolving manner for subsequent cycles. For example, in the next cycle, one of the two other shafts operating in regeneration mode is turned into combustion mode, the other one continues to operate in regeneration, while the shaft that was in the combustion mode becomes the other shaft operating in regeneration.

Starting from this known way to operate a three-shaft vertical kiln, namely a three-shaft parallel flow regenerative kiln, the multi-shaft vertical kiln according to the invention comprises the following modifications (during the same cycle):
- the (first) shaft 100 in the combustion mode is not cooled with cooling air or with a limited amount of cooling air;
- the (second) shaft 200 in the recovering mode is not cooled with cooling air;
- the (third) shaft 300 in the cooling mode is cooled with all cooling fluid 90, in particular air or a reduced flow amount of cooling air compared to what is used in the known kiln.

In case all the cooling air is supplied in the third shaft 300, such air is injected at a lower end portion, particularly at the bottom of said shaft 300. Since the three shafts are in communication via their transfer channels 412, 423, 431, a portion of this cooling air (e.g., 0% to 33% in volume dry basis) may go to the shaft 200 in the recovery mode, while the remaining portion (e.g., 67 to 100% in volume dry basis) remains in the shaft 300 in the cooling mode (third shaft). The air that remains in the third shaft 300 crosses the burning zone (also known as the heating zone) 320 as well as the preheating zone 310.

In the burning zone 320 of the third shaft 300, where temperatures can exceed 900°C, some CO₂ is emitted by the carbonated materials 10. Such a CO₂ flow resulting from the decarbonation mixes with the cooling air 90 raising from the bottom of the shaft 300. Additionally, a portion 42 of the exhaust gas 40 from the shaft in the combustion mode 100 is introduced into the third shaft 300 via the transfer channel 431. This gas is also mixed with the cooling gas flow 90 and the CO₂ from decarbonatation (a.k.a. decarbonation), forming a gas mixture exiting an upper end portion of the shaft in the cooling mode. This mixture is referred to as the effluent stream 91, typically containing 10 to 15% oxygen and up to 35% carbon dioxide on a dry basis by volume. The effluent stream 91 is preferably filtered (not shown in Figure 1B) and cooled (to condense and remove water in cooling unit 720) before being recirculated, using a fan or compressor (e.g., root blower) 510, to the shaft 100 in the combustion mode. Indeed, the effluent stream 91 recycled from the shaft in the cooling mode 300 is used as comburent mixture instead of using "air" encountered in the traditional way to operate a kiln. Furthermore, a controlled level of O₂ is injected in the effluent gas 91 to assure a complete combustion and to avoid high flame temperature. The effluent stream 91 can be mixed with a substantial pure O₂ to reach O₂ concentration between 15 and 30% in volume on a dry basis for the preparation of a partial oxyfuel combustion. The injection of O₂ allows to exploit the nominal potential of the existing fuel supply and achieve a complete combustion in case the 3-shaft is an upgrade version of an existing three-shaft kiln. Advantageously, the O₂ could be injected into a piping element of a recirculation comburent assembly 500 disposed between the shaft 300 in the cooling mode and the shaft 100 in the combustion mode, before or after the cooling unit 720. The O₂ injection comprises, for instance, a substantially pure oxygen composition and/or N₂ depleted air composition generated in an Air Separation Unit (ASU).

In the shaft 200 in the regeneration mode, the CO₂ produced in the burning zone 220 due to decarbonation combines with a portion 41 of exhaust gas transferred via the transfer channel 412, forming an exhaust stream containing a high level of CO₂. The majority of the exhaust gas 40 generated in the combustion shaft 100 is transferred to the shaft 200 in the recovery mode through said crossover channel 412. Simultaneously, a certain portion of the exhaust gas 40 generated in the shaft 100 in the combustion mode enters the shaft 300 in the cooling mode through the corresponding crossover channel 431. In the shaft 100, in the combustion mode, the fuel is injected inside the shaft 100, in the usual way, namely through the passage in the fuel lances dedicated to fuel supply. In the first embodiment, the shaft 200 in the recovering mode is not cooled with cooling air injected at its bottom. The shaft 200 in the regeneration mode is essentially heated by the exhaust gas 40 from the shaft 100 in the combustion mode. Additionally, a portion 92 of the cooling air 90 is transferred from the shaft 300 in the cooling mode to the shaft 200 in the regeneration mode. Nevertheless, the pressures in the three shafts 100, 200, 300, in particular between the shaft 300 in the cooling mode and the shaft 200 in the regeneration mode are controlled to meter gas transfer 92 between the shaft 300 in the cooling mode and the shaft 200 in the regeneration mode. In particular, this transfer is preferably reduced as an excessive amount would increase the O₂ content in the exhaust gas. Even a reverse flow 92 can be foreseen depending on the circumstances. The gas composition exiting the shaft 200 in the regeneration mode attains a high CO₂ concentration, typically ranging from 45 to 55% by dry volume, with the recovery of almost all (>95%) of the CO₂ produced, both from decarbonation and combustion processes. The fumes, also known as the exhaust gas stream exiting the shaft 200 in the recovering mode is preferably directed to a filtration unit (not illustrated in Figure 1B), followed by a cooling unit 710, before being dampened in a gas holder system 1000, for pressure and flow stabilization.

Preferably, during the cycle illustrated in Figure 1B, a counter pressure at the exit of the shaft in the recovery mode 200 is controlled in order to meter the exhaust gas 42 flow transferred from the shaft 100 in the combustion mode to the shaft in the cooling mode, as this gas transfer would dilute the cooling gas stream and reduces its relative dioxide content. The control of the counter pressure can be ensured by a throttle valve 610 arranged in the exhaust passage assembly 600. Additionally, a throttle 930 and/or a compressor 940 of the cooling suppling system 900 connected to the third shaft can be used to control the relative pressure between the shaft 300 in the cooling mode and the shaft 100 in the combustion mode, notwithstanding the fact the compressor 510 in the comburent recirculation passage assembly 500 can also be used to control the relative pressure between the shaft 100 in the combustion mode and the shaft 300 in the combustion mode 100. The common control of these valves 930, 610 and the compressors 510, 940 ensures the metering of the cross flows in the cycle shown in Figure 1B:
- between the shaft 100 in the combustion mode and the shaft 300 in the cooling mode,
- between the shaft 300 in the cooling mode and the shaft 200 in the regeneration mode,
- and between the shaft 100 in the combustion mode and the shaft 200 in the regeneration mode.

Alternatively, or complementary the control means exposed in the previous paragraph, an asymmetric static throttling element (without moving part) can be introduced in the transfer channels 412, 423, 431, as a means to ensure the flow control. With a static throttling element presenting an asymmetric behaviour, the flow resistance in one direction is different than in an inverse flow.

Depending on the specification required for Carbon Capture Utilization and Storage applications, one or more further steps are performed on the fumes exiting the kiln. For instance, in case a high content of CO₂ is specified by one end user, one or more CO₂ separation units are needed to concentrate the CO₂ content. In case of multiple CO₂ separation units, they can be arranged in series and/or parallel. Typically, the one or more CO₂ separation units can be selected from the group comprising a membrane separation unit 2000, cryogenic separation unit, a pressure swing absorption unit and/or an amine wash unit. Preferably, the one or more of these units need to be supplied with a continuous gas flow to ensure an efficient purification. For this reason, the unsteady fume flow leaving the multi-shaft vertical kiln is "smoothed" so as to form a substantially steady flow entering the one or more CO₂ separation unit directly connected to said kiln. To achieve a dampened fume flow 48, one or more reservoirs are provided. Equally, the one or more reservoirs arranged in the exhaust line allow that the CO₂ separation unit(s) can be fed at any time with the exhaust gas, especially during the revolving sequence switches, when the combustion mode is transferred from one shaft to another, implying an exhaust flow disruption.

In the first embodiment, the fuel lances in the shaft 200 in the recovering mode and in the shaft 300 in the cooling mode are cooled using at least one or more of the following measures: a portion of the cooled exhaust gas stream 46 extracted from a pipe element positioned downstream from the cooling unit 710 is fed in both the fuel lances of the shaft 200 in the recovering mode and the fuel lances of the shaft 300 in the cooling mode. Said gas is preferably fed in at least one lance passage dedicated to the fuel supply. Taking a cooled exhaust gas prevent to recirculate a reduced amount of water allowing a better overall efficiency, in particular when a hydrogenated fuel is used. The exhaust gas can also be extracted after or directly on the reservoir 1000, or before the cooling unit 710 arranged in the exhaust passage assembly 600. As the same gas composition is used for the cooling of the shaft 200 in the regeneration mode and the shaft 300 in the cooling mode, a single blower or fan 640 can ensure the entire cooling of the lances.

Alternatively to the aforementioned lance cooling approach, the fuel lances in the shaft 200 in the recovering mode are cooled with the or another portion of the exhaust gas, preferably depleted in water extracted from the pipe positioned downstream from the cooling unit 710, preferably said gas being fed in at least one lance passage dedicated to the fuel supply. In the meanwhile, the fuel lances in the shaft 300 in the cooling mode 300 are cooled using a portion of the effluent stream 91, preferably, some of the effluent stream 91 being fed in at least one lance passage dedicated to the fuel supply. As different gas compositions are used for the cooling of the shaft 200 in the regeneration mode and the shaft 300 in the cooling mode, at least two separate blowers are needed to assure the lances cooling.

Alternatively, to the aforementioned lance cooling approaches, the fuel lances in the shaft 200 in the recovering mode and in the shaft 300 in the cooling mode are cooled using a portion of the effluent stream 91. In particular, said gas being preferably fed in at least one lance passage dedicated to the fuel supply. In this configuration a single blower can ensure the fuel lance cooling with said effluent stream 91, as the same gas composition is used for the cooling of both the shaft 200 in the regeneration mode and the shaft 300 in the cooling mode.

Alternatively, or complementary to the first embodiment with a dioxygen injection in the comburent recirculation passage as illustrated in Figure 1B, oxygen enriched air (OEA) can be used as the cooling fluid 90. Preferably, cooling air is mixed with an oxygen substantially pure composition and/or a N₂ depleted air composition generated in an Air Separation Unit (ASU) is supplied via the cooling supply system 900, in a lower end portion of the shaft 300 in the cooling mode.

Alternatively or complementary to a cooling control of the first embodiment, in which the cooling of the shaft 100 in the combustion mode is stopped, a limited amount of a cooling fluid (e.g. air) is supplied in a lower end of the shaft 100 in the combustion mode, thereby avoiding that CO₂ goes down from the heating zone 120 into the cooling zone 130. This measure can be implemented to prevents an eventual recarbonatation of the quicklime in an upper region of the cooling zone 130 of the shaft 100 in the combustion mode. The cooling fluid for the shaft in the combustion mode can be different from the cooling fluid used for the shaft in the cooling mode. The cooling fluid for the shaft in the combustion mode can be air or a gas composition depleted in dioxygen (e.g., less than 20% dry volume) and carbon dioxide (e.g., less than 0,04% dry volume). Said fluid can be used as a cooling fluid in the lower end of the shaft 100 in combustion. A gas composition depleted in dioxygen may be favoured to reach a low content dioxygen exhaust gas stream. The gas composition depleted in dioxygen and with low carbon dioxide (<0,04%) can be obtained from the N₂ enriched stream exiting an air separation unit (ASU), such a pressure swing absorption. Indeed, the stream depleted in dioxygen (N₂ enriched stream) exiting said air separation unit can serve as cooling fluid for the shaft 100 in the combustion mode, while the dioxygen enriched stream (N₂ depleted stream) generated in said ASU can be used as a source of dioxygen to form the comburent rich in dioxygen. Preferably, the N₂ depleted stream is mixed with air to form the cooling fluid supplied to the shat 300 in the cooling mode.

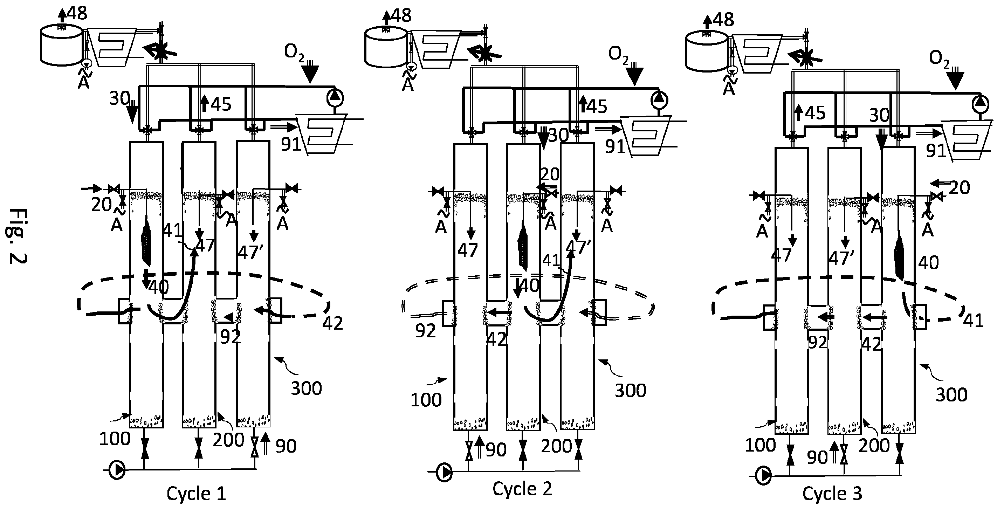

Figure 2 shows how the three-shaft kiln MSVK operates in three revolving sequences (three-cycle mode) so as to balance the operation of each shaft of said kiln. The first cycle corresponds to the cycle presented in Figure 1B. In a second cycle subsequent to said first cycle, the first shaft 100 is in the cooling mode, the second 200 shaft is in the combustion mode, and the third shaft 300 is in the regeneration mode. In a third cycle subsequent to said second cycle, the first shaft 100 is in the regeneration mode, the second 200 shaft is in the cooling mode, and the third shaft 300 is in the combustion mode. Then, this sequence is repeated.

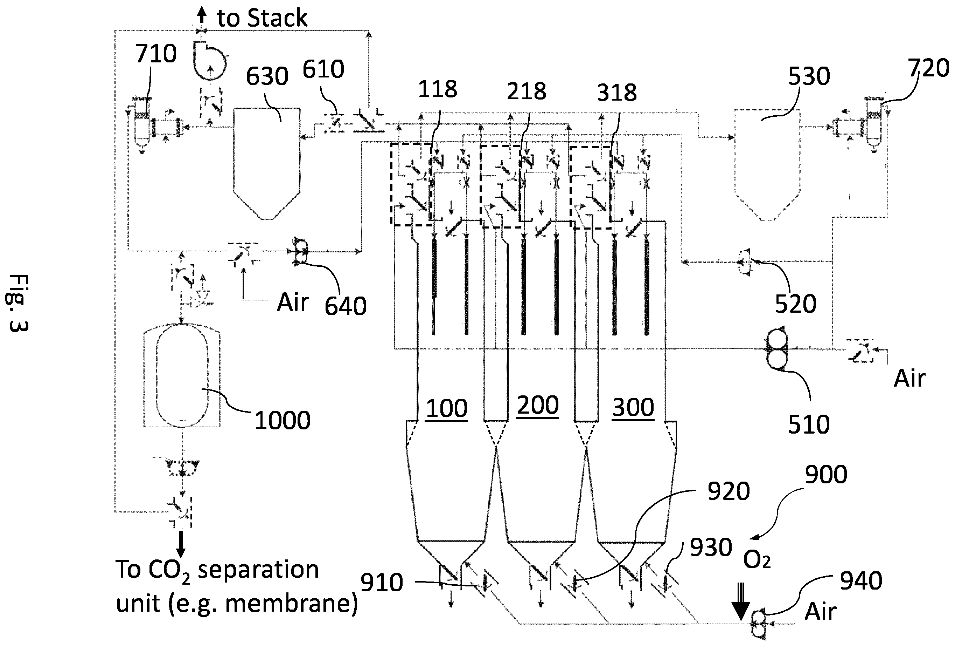

The second embodiment according to Figure 3 differs from the first embodiment in that it discloses not only:
- a specific arrangement for the distribution valve arrangements 118, 218, and 318, characterized in that a flap system is added on the top of each shaft to the pre-existing flap system, but also
- the introduction of the substantially pure oxygen source at the bottom of the shafts. The injection of O₂ in the cooling suppling system 900 compared to an injection of O₂ in the comburent recirculation passage assembly 500 is preferable as the injection of O₂ in the cooling suppling system 900 ensures the replacement of some N₂ in the air by O₂, decreasing the total amount of N₂ in the kiln, and having a positive impact on the CO₂ concentration in the exhaust gas. In case of O₂ is injected in the cooling suppling system 900, the cross flow 92 between the shaft 300 in the cooling mode and the shaft 200 in the regeneration mode via the transfer channel 423 should be reduced to avoid a slipping of O₂.

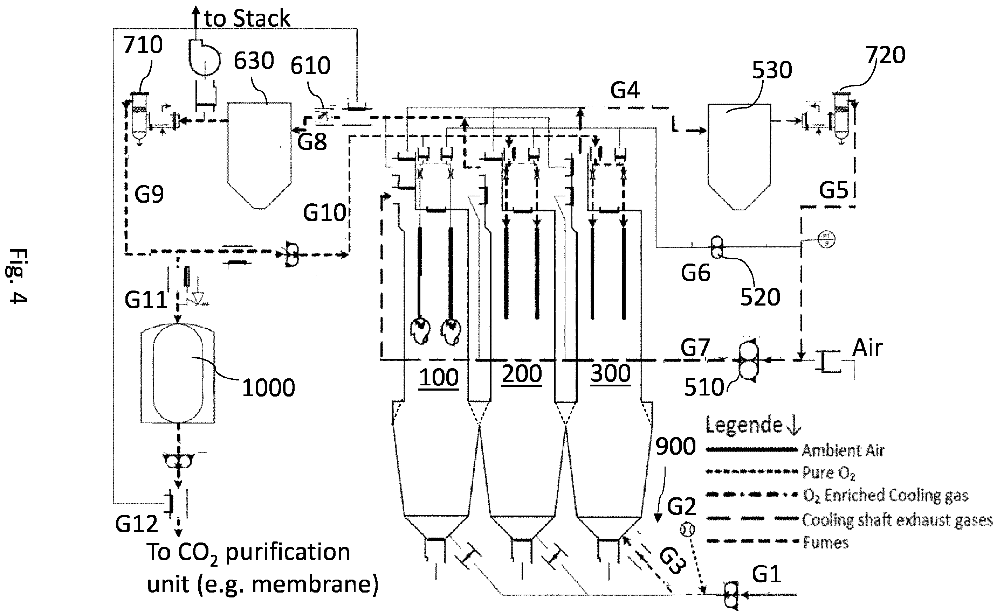

In Figure 4, a possible valve switching configuration is presented for the three-shaft kiln of the second embodiment corresponding to the first cycle. Typically, thermodynamical values illustrating a possible way to carry out the kiln of the present invention are presented in the table below:

**Table 1**

| | Volumetric flow (kNm³/hr) | Static pressure (mbar) | Temperature (°C) | CO₂ (%vol) | H₂O (%vol) | O₂ (%vol) |
|---|---|---|---|---|---|---|
| G1 | (about) 6.9 | (about) 0 | (about) 25 | (about) 0 | (about) 3 | (about) 20 |
| G2 | (about) 1.9 | (about) 250 | (about) 15 | (about) 0 | (about) 0 | (about) 95 |
| G3 | (about) 8.8 | (about) 250 | (about) 39 | (about) 0 | (about) 2 | (about) 36 |
| G4 | (about) 21.2 | (about) 10 | (about) 80 | (about) 33 | (about) 9 | (about) 15 |
| G5 | (about)20.8 | (about)-75 | (about)40 | (about)34 | (about)7 | (about)15 |
| G6 | No flow | Not applicable as flow being interrupted | | | | |
| G7 | (about) 20.8 | (about) 400 | (about) 64 | (about) 34 | (about) 7 | (about) 15 |
| G8 | (about) 18.5 | (about) -10 | (about) 80 | (about) 42 | (about) 16 | (about) 2 |
| G9 | (about) 16.8 | (about) 10 | (about) 40 | (about) 47 | (about) 7 | (about) 3 |
| G10 | (about) 2.2 | (about) 10 | (about) 40 | (about) 47 | (about) 7 | (about) 3 |
| G11 | (about) 14.6 | (about) 10 | (about) 40 | (about) 47 | (about) 7 | (about) 3 |
| G12 | (about) 13.5 | (about) 0 | (about) 40 | (about) 47 | (about) 7 | (about) 3 |

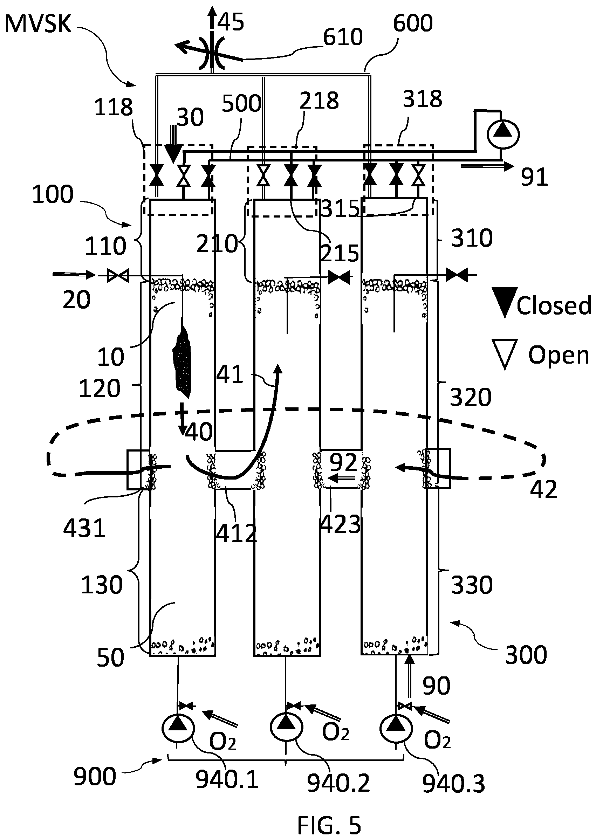

The third embodiment according to Figure 5 differs from the second embodiment in that each distribution valve arrangement 118, 218, 318 comprises three (split) two-way valves. Furthermore, three ports are foreseen in the upper end portion of each shaft. This approach underlines that different valves and ports configuration are possible, besides a combination of a double flap system. However, the double flap solution remains advantageous for retrofitting existing three-shaft kilns already equipped with flap valves. Furthermore, Figure 5 shows a different cooling supply system with an individual air pump for each shaft fitted with a dioxygen source. Such a cooling supply system may improve the control of the flow but is less recommended in a retrofit configuration as it would require mode adaptations. Figure 5 shows a single opening for the cooling stream at the bottom of each shaft. If necessary, the number of openings can be modified with for instance a dedicated opening for the dioxygen supply during the cooling mode or a gas depleted in oxygen and carbon dioxide during the combustion mode. Even if Figure 5 does not show cooling units neither in the exhaust passage assembly nor in the comburent recirculation passage assembly, the reservoir to smooth the exhaust flow nor the cooling of the fuel lances, one or more these elements/measures can be advantageously introduced in the third embodiment or any of the subsequent embodiments.

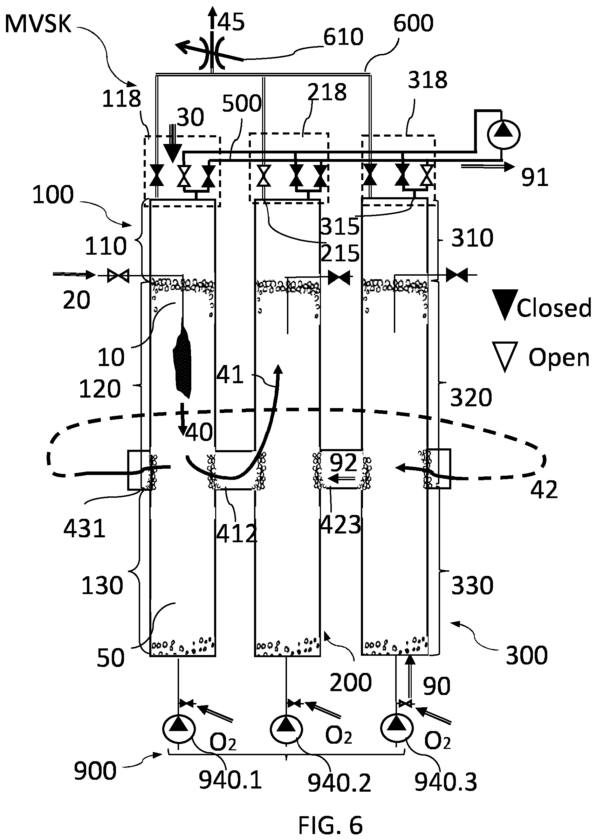

The fourth embodiment according to Figure 6 differs from the third embodiment in that, a combination of:
- a dual-valve assembly comprising a pair of two-way valves connected, on one end, to the comburent recirculation passage assembly 600 and, on another end, to a common aperture opening in the corresponding shaft, and
- a two-way valve connected, on one end, to the exhaust passage assembly 500 and, on another end, to another aperture opening in the corresponding shaft,
is used for each shaft. Alternatively, these dual-valve assemblies can be replaced by flap valves.

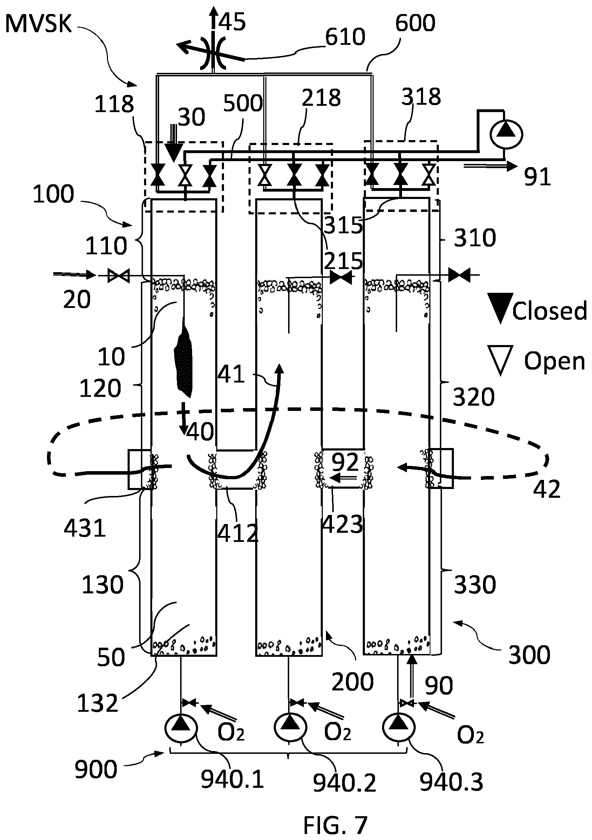

The fifth embodiment according to Figure 7 differs from the third embodiment in that for each shaft, the three 2-way valves are connected to a common aperture opening the corresponding shaft.

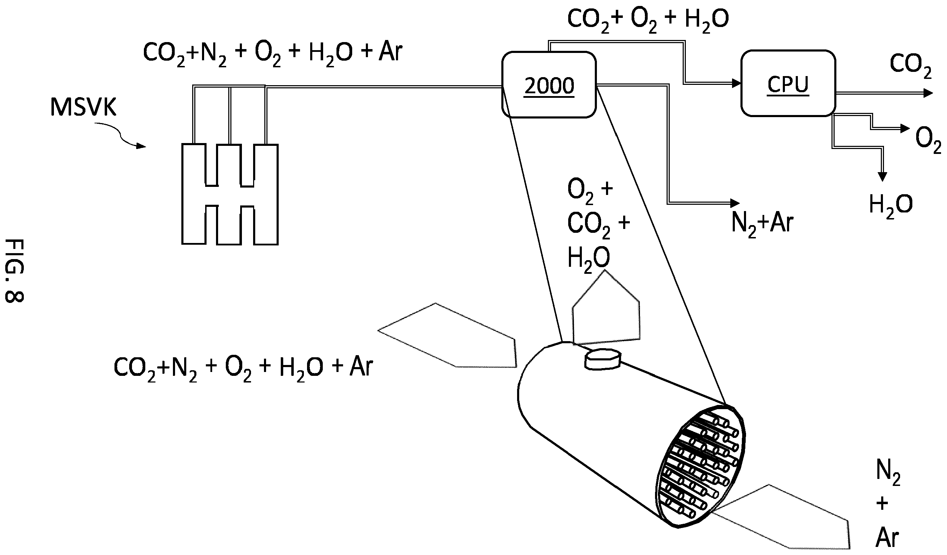

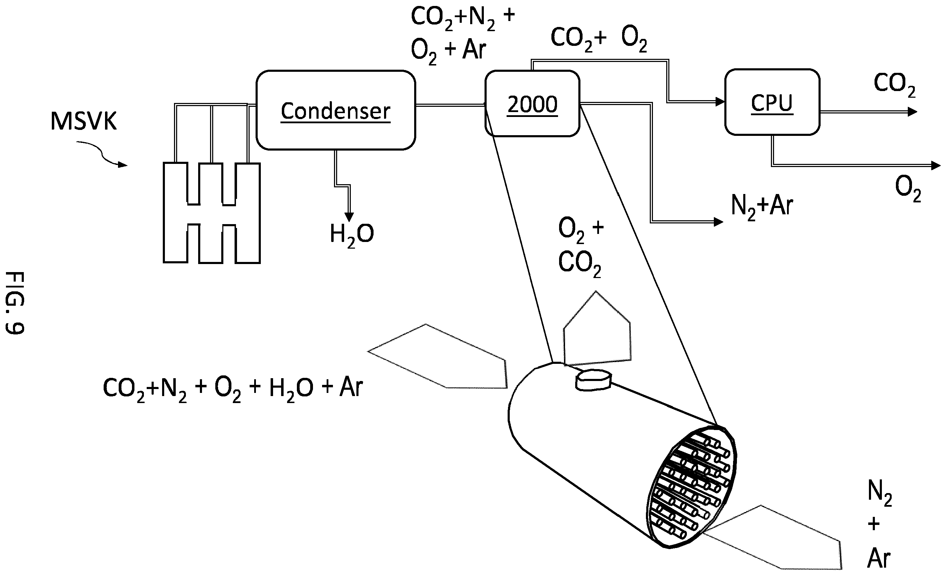

The sixth embodiment according to Figure 8 differs from the first embodiment in that a membrane separation unit 2000, in particular a one stage membrane separation, for concentrating the exhaust flow in CO₂ is provided. This unit 2000 is arranged downstream from the multi-shaft vertical kiln, allowing to reach a CO₂ content (weight dry basis) of least 75%. A CO₂ purification unit (CPU) is positioned downstream from the membrane separation unit 2000 to increase the CO₂ concentration in the exhaust gas to a value higher than 99% (dry volume), for instance. The membrane separation unit 2000 (a.k.a. membrane filter) is adapted to separate the CO₂, O₂ and traces of H₂O from the exhaust gas. The membrane of the filter is formed by example by the porous wall of inner tubes arranged in a conduct pipe. The porous walls of the inner tubes allow molecules such as O₂,CO₂, H₂O with a higher rate of penetration to pass though the membrane pores compared to N₂ molecules which do show a lower penetration rate. The gas molecule penetration rate depends on their size and diffusivity. As the membrane separation unit 2000 also favours H₂O separation compared to N₂, it is preferable that most of H₂O is removed from the exhaust gas prior to the membrane separation stage. Even if the exhaust gas undergoes a first water separation in the condenser unit 710, an additional condenser should be provided upstream from the membrane separation unit 2000 to remove the water and obtain an exhaust gas substantially free of H₂O before the membrane separation as illustrated in Figure 9 according to a seventh embodiment. For this purpose, a membrane separation unit 2000 can enclose this additional condenser to minimise the amount of water in the gas to be treated before the membrane stage separation. Alternatively, or complementary to the introduction of an additional condenser, the water separation efficiency of the condenser unit 710 can be increased.

Preferably, the CO₂ purification unit (CPU) is configured to remove at least one of the following elements: acid gases, O₂,Ar, CO, H₂O, NOx, sulfur compounds, heavy metals, in particular Hg, Cd, and/or organic compounds, in particular CH₄, benzene, hydrocarbons. More preferably, the CO₂ purification unit (CPU) is adapted to adjust the composition of the exhaust gas to the specification required by a carbon capture and utilization or carbon capture and storage application, preferably with a CO₂ content above 90% (dry volume), more preferably above 95% (dry volume), in particular 99% (dry volume). Typically, a CO₂ purification unit (CPU) relies on cryogenic separation allowing to reach a high CO₂ purity. In the sixth or seventh embodiment, the CPU produces a concentrate of dioxygen that can be recycled in the three-shaft-kiln as a comburent. Alternatively, to the sixth or seventh embodiment, the overall CO₂ purification can be performed in a cryogenic separation unit, thereby excluding a membrane separation stage. However, such an approach requires more capital investment than the solution proposed in Figure 8 or 9. Other techniques to purify the CO₂ can be applied such as pressure swing absorption unit and/or an amine wash unit. Nevertheless, the selection of a membrane separation unit, even a single stage separation unit appears not only particularly efficient in terms of capex and energy consumption but also appears particularly well suited for exhaust gas composition emitted by the kiln of the present invention as the residual amount of oxygen in the exhaust gas immitted by the kiln is particularly low. Indeed, as the membrane separation favours separation of polar molecules (e.g., H₂O, CO₂) and O₂ from N₂, the treatment of an exhaust stream depleted in H₂O and O₂ would naturally lead to a CO₂ enriched stream exiting the membrane separation unit.

The present invention is preferably focused on a retrofit of existing 3-shaft kiln. Alternatively, a battery of two-shaft vertical kilns (e.g., two-shaft parallel flow kilns) can be converted into to an embodiment falling in the object claimed of the present invention. For instance, three parallel regenerative kilns comprising two shafts each can be transformed into a pair of 3 shaft-kilns. In this context, one or more additional transfer channels may be introduced, and one or more existing transfer channels may be closed or dismantled. In this context, the section of some of the transfer channels may be adapted to obtain balanced flows between the shafts even if the lengths of the transfer channels are not the same.

The meaning of "substantially pure oxygen" in the present disclosure is an oxygen gas comprising at least 90 % (dry volume) dioxygen (i.e. O₂), preferably at least 95% (dry volume) dioxygen (i.e. O₂).

The meaning of "dinitrogen depleted air" is a gas composition comprising less than 79% of dinitrogen, preferably less than 70% of dinitrogen, more preferably less than 60% of dinitrogen on a dry basis in volume and/or at least 30% of dioxygen, preferably more than 40% of dioxygen. Such a gas composition can be obtained from an air separation unit (ASU), in particular pressure swing absorption unit.

The meaning of "dioxygen enriched air" in the present disclosure is a gas composition comprising at least 21% of dioxygen, preferably at least 30%, more preferably at least 40% on a dry basis in volume. This composition can be obtain trough mixing air with substantially pure oxygen and/or dinitrogen depleted air. The meaning of "multi vertical-shaft kiln" in the present disclosure is a kiln comprising at least three shafts 100, 200, 300. The shafts 100, 200, 300 are not coaxial and are disposed side by side to the extent that any shaft of a group consisting of the first and second, and optimally the third shaft 100, 200, 300 is not encircled by the other or another shaft 100, 200, 300 of said group. In other words, the cross-over channels 412, 423, 431 are arranged outside the shafts 100, 200, 300. This definition excludes an annular-shaft kiln in case it was interpreted as being a multi vertical-shaft kiln. A parallel-flow regenerative kiln is a specific form of a multi vertical-shaft kiln in the present definition. The multi vertical-shaft kiln according to the claims or the embodiments fall under the definition of a parallel-flow regenerative kiln (in German: *"Gleich Gegenstrom Regernativ Ofen").* According to the invention, the term "vertical" in "multi vertical-shaft kiln" does not necessarily require that the longitudinal axes of the shafts 100, 200, 300 have an exact vertical orientation. Rather, an exact vertical directional component of the alignment should be sufficient, with regard to an advantageous gravity-related transport of the material in the shafts, an angle between the actual alignment and the exact vertical alignment amounts to at most 30°, preferably at most 15° and particularly preferably of 0° (exactly vertical alignment).

Each shaft 100, 200, 300 of the multi-shaft vertical kiln comprises a preheating zone 110, 210, 310, a heating zone 120, 220, 320 and a cooling zone 130, 230, 330. A cross-over channel 412, 423, 431 is disposed between each shaft 100, 200, 300. According to the present disclosure, the junction between the heating zones 120, 220, 320 and the cooling zones 130, 230, 330 is substantially aligned with the lower end of the cross-over channel(s) 412, 423, 431.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. Decarbonation process for carbonated materials (10), in particular carbonated minerals, preferably limestones and/or dolomitic limestones, in a multi-shaft vertical kiln (MSVK) comprising a first (100), a second (200) and a third (300) shaft with preheating zones (110, 210, 310), heating zones (120, 220, 320) and cooling zones (130, 230, 330) and a cross-over channel (412, 423, 431) between each shaft, alternately heating carbonated materials (10) by a combustion of at least one fuel (20) with at least one comburent (30) up to a temperature range in which carbon dioxide of the carbonated materials (10) is released, the combustion of the fuel and the decarbonation generating an exhaust gas (40), wherein in an alternating cycle, the first (100) shaft is in a combustion mode, the second (200) shaft is in a regeneration mode and the third shaft (300) is in a cooling mode, wherein in the regeneration mode, the carbonated materials (10) in the second shaft (200) are heated with a first portion (41) of the exhaust gas (40) generated in the first shaft (100) being in the combustion mode and transferred from the first shaft (100) to the second shaft (200) via the cross-over channel (412) connecting the first (100) and second shaft (200), and an exhaust gas stream (45) exits the second shaft (200) via an aperture (215), opening in the second shaft (200) and fluidly connected to an exhaust passage assembly (600), wherein in the cooling mode, the decarbonated materials (50) are cooled in the cooling zone (330) of the third shaft (300) with a cooling stream (90) comprising dioxygen, wherein an effluent stream (91) composed of:
- (a) a portion of the cooling stream (90),
- (b) a second portion (42) of the exhaust gas (40) generated in the first shaft (100) transferred from the first (100) shaft to the third shaft (300) via the cross-over channel (431) connecting the first (100) and third shaft (300) and
- (c) CO₂ resulting from the decarbonation of the carbonated materials (10) in the third shaft (300), whose temperature lies in the temperature range,
exits the third (300) shaft via an aperture (315), opening in said shaft (300), wherein at least a portion of the effluent stream (91) is recirculated in the first shaft (100) via a comburant recirculation passage assembly (500), as one or more of the at least one comburent (30).

2. Process according to Claim 1, further comprising enriching the at least a portion of the effluent stream (91) exiting the third (300) shaft in dioxygen before feeding the first shaft (100) with said stream (91) and/or supplying the first shaft (100) with dioxygen via an oxygen supply port opening in said shaft (100), preferably said port being arranged in an upper end portion of said kiln (MSVK).

3. Process according to any of the preceding claims, wherein the cooling stream (90) is composed of air or dioxygen enriched air, wherein said stream (90) comprises at least 20% of dioxygen, preferably at least 21% of dioxygen, more preferably at least 30% of dioxygen, in particular at least 40% of dioxygen on a dry basis in volume.

4. Process according to any of the preceding claims, further comprising controlling the pressure and/or the flow rate in at least one of the second shaft (200) and/or third shaft (300) during the alternating cycle in order to control at least one of: the first portion (41) of the exhaust gas (40) transferred from the first shaft (100) to the second shaft (200) via the cross-over channel (412) connecting the first (100) and second shaft (200), the second portion (42) of the exhaust gas transferred from the first (100) shaft to the third shaft (300) via the cross-over channel (431) connecting the first (100) and third shaft (300) and/or a portion (92) of the cooling stream (90) transferred from the third (300) shaft to the second shaft (200) via the cross-over channel (423), preferably using at least one of:
- a throttle valve (610) located in the exhaust passage assembly (600),
- a fan or a compressor (510) located in the comburent passage assembly (500) and/or
- at least one of: one or more throttles (910, 920, 930) , one or more fans and/or one or more compressors (940, 940.1, 940.2, 940.3) of a cooling supply system (900) adapted to supply the cooling stream (90).

5. Process according to any of the preceding claims, wherein a or the cooling supply system (900) is adapted to control a cooling stream amount to be supplied in the third shaft during the alternating cycle, wherein a feeding of a cooling stream to be supplied in the first shaft (100) is stopped during the alternating cycle or a cooling stream amount to be supplied in the first shaft (100), preferably consisting of air or a gas composition depleted in both O₂ and CO₂, in particular with O₂ lower 20% and CO₂ lower than 0,04% on a dry basis in volume, is controlled in such a manner that the cooling stream amount to be supplied in the first shaft (100) does not exceed 18%, preferably 10%, in volume of the amount of the cooling stream to be supplied in the third shaft (300) during the alternating cycle, optionally a feeding of a cooling stream to be supplied in the second shaft (200) being stopped during the alternating cycle.

6. Process according to any of the preceding claims, further comprising providing a dampened exhaust gas stream (48) with a reservoir (1000) fed with at least a portion of the exhaust gas stream (45) exiting the second shaft (200) during the alternating cycle or in an alternating subsequent cycle, and optionally cooling the at least one portion of the exhaust gas stream (45) in a first cooling unit (710), in particular a first condenser, to form a cooled exhaust gas stream (46) subsequently fed in the reservoir (1000), preferably said cooled exhaust gas stream (46) having a water content lower than 10% in volume.

7. Process according to any of Claims 1 to 5, preferably in combination with Claim 6, further comprising feeding at least one fuel lance of the second shaft (200) during the alternating cycle with at least one of:
- a first lance exhaust gas cooling stream (47) formed with at least one of: another portion of the exhaust gas stream (45), a portion of the cooled exhaust gas stream (46) and/or a portion of the dampened exhaust gas stream (48), or
- a portion of the effluent stream (91).

8. Process according to any of Claims 1 to 5 or 7, preferably in combination with Claim 6, further comprising feeding at least one fuel lance of the third shaft (300) with at least one of :
- a second lance exhaust gas cooling stream (47') formed with at least one of: a further portion of the exhaust gas stream (45), a further portion of the cooled exhaust gas stream (46) and/or another portion of the dampened exhaust gas stream (48), or
- a further portion of the effluent stream (91).

9. Process according to any of the preceding claims, further comprising cooling the effluent stream (91) exiting the third (300) shaft in a second cooling unit (720), in particular a second condensation unit (720).

10. Process according to any of the preceding claims, further comprising fluidly connecting the third shaft (300) and the upstream end the comburent recirculation passage assembly (500) during the alternating cycle via a distribution valve arrangement (318) comprising at least one movable member allowing a fluid communication between either a first, a second or third end port, with at least one fourth end port, said first end port being in fluid communication with a downstream end of the comburent recirculation passage assembly (500), the second end port being in fluid communication with the exhaust passage assembly (600), the third end port being in fluid communication with an upstream end of the comburent recirculation passage assembly (500), the at least one fourth end port being in communication with the aperture (315) in the third (300) shaft.

11. Process according to any of the preceding claims, wherein the alternating cycle is a first alternating cycle, and said process further comprises a second alternating cycle subsequent to said first alternating cycle and optionally a third alternating cycle subsequent to said second alternating cycle, wherein in said second alternating cycle, the first (100) shaft is in the cooling mode, the second (200) shaft is in the combustion mode, and the third (300) shaft is in the regeneration mode, and wherein in said third alternating cycle, the first (100) shaft is in the regeneration mode, the second (200) shaft is in the cooling mode, and the third (300) shaft is in the combustion mode.

12. Process according to any of Claims 1 to 5 or 8 to 11, optionally in combination with Claim 6 or 7, wherein the at least a portion of exhaust gas (45) exiting the exhaust passage assembly (600), the cooled exhaust gas stream (46) exiting the first cooling unit (710) or the dampened exhaust gas stream (48) exiting the reservoir (1000) has at least one of:
- a CO₂ content of between 40% to 60%, in particular between 45% to 55%, by volume on a dry basis and/or
- a O₂ content lower than 4%, preferably lower than 3%, in particular lower than 2% by volume on a dry basis.

13. Process according to any of Claims 1 to 5 or 8 to 12 in combination with Claim 6 or 7, further comprising purifying in CO₂ at least one of: the at least a portion of exhaust gas (45) exiting the exhaust passage assembly (600), the cooled exhaust gas stream (46) exiting the first cooling unit (710) and/or the dampened exhaust gas stream (48) exiting the reservoir (1000), in at least one CO₂ separation unit, thereby forming a CO₂ depleted stream and CO₂ enriched stream, preferably having a content of CO₂ higher than or equal to 95% in volume on a dry basis, preferably the at least one CO₂ separation unit being selected from the group comprising a membrane separation unit, preferably a single stage membrane separation unit, cryogenic separation unit, a pressure swing absorption unit and/or an amine wash unit.

14. Multi-shaft vertical kiln (MSVK) comprising a first (100), a second (200), and a third shaft (300) with preheating zones (110, 210, 310), heating zones (120, 220, 320) and cooling zones (130, 230, 330) and a cross-over (412, 423, 432) channel between each shaft (100, 200, 300), said kiln (MSVK) being adapted for carrying out the process according to any of the preceding claims, said kiln (MSVK) comprising:
- a cooling supply system (900) for cooling one of the shafts, said shaft being in a cooling mode;
- a comburent recirculation passage assembly (500) for transferring at least a portion of an effluent stream (91) from the one of the shafts in the cooling mode to another one of the shafts, said shaft being in a combustion mode;
- optionally a recirculation fan or compressor (510) arranged in the comburent recirculation passage assembly (500) for circulating the at least a portion of the effluent stream (91);
- an exhaust passage assembly (600) for discharging an exhaust gas stream (45) from the remaining one of the shafts, said shaft being in a regeneration mode,
- wherein at least one shaft (100, 200, 300), preferably each shaft (100, 200, 300), is connected to a distribution valve arrangement (118, 218, 318), said arrangement (118, 218, 318) comprising a distribution valve arrangement (118, 218, 318) comprising at least one movable member allowing a fluid communication between either a first, a second or third end port, with at least one fourth end port, said first end port being in fluid communication with a downstream end of the comburent recirculation passage assembly (500), the second end port being in fluid communication with the exhaust passage assembly (600), the third end port being in fluid communication with an upstream end of the comburent recirculation passage assembly (500), the at least one fourth end port being in communication with at least one aperture (115, 215, 315) opening in the corresponding shaft.

15. Multi-shaft vertical kiln (MSVK) according to the preceding claim, wherein the distribution valve arrangement (118, 218, 318) comprises either:
- a 3-way valve assembly having an upstream port in fluid communication with one of the at least one aperture (115, 215, 315) opening in the corresponding shaft, the second end port in fluid communication with the exhaust passage assembly (600) and the third end port in fluid communication with the upstream end of the comburant recirculation passage assembly (500), wherein a movable member of the 3-way valve assembly allows a fluid communication between the upstream port and either said second end port or said third end port,
- a dual-valve assembly comprising a first and a second 2-way valves, said valve assembly having a common upstream port in fluid communication with one of the at least one the aperture (115, 215, 315) opening in the corresponding shaft, the second end port fluidly connected to said first 2-way valve and in fluid communication with the exhaust passage assembly (600) and the third end port fluidly connected to said second 2-way valve and in fluid communication with the upstream end of the comburant recirculation passage assembly (500), wherein a first and second movable member in the first and the second 2-way valves, respectively, allow a fluid communication between the common upstream port and either said second end port or said third end port, or
- a split-valve assembly comprising a first and a second 2-way valves, said assembly having a first upstream port and a second upstream port in fluid communication with a first and second of the at least one aperture (115, 215, 315) opening in the corresponding shaft, the second end port fluidly connected to said first 2-way valve and in fluid communication with the exhaust passage assembly (600) and the third end port fluidly connected to said second 2-way valve and in fluid communication with the upstream end of the comburant recirculation passage assembly (500), wherein a first and second movable member in the first and the second 2-way valves, respectively, allow a fluid communication between the first upstream port and said second end port while the fluid communication between the second upstream port and said third end port is closed, and vice versa.

## Patentansprüche

1. Dekarbonisierungsverfahren für kohlensäurehaltige Materialien (10), insbesondere kohlensäurehaltige Mineralien, vorzugsweise Kalksteine und/oder dolomitische Kalksteine, in einem Mehrschachtofen (MSVK) umfassend einen ersten (100), einen zweiten (200) und einen dritten (300) Schacht mit Vorwärmzonen (110, 210, 310), Heizzonen (120, 220, 320) und Abkühlzonen (130, 230, 330) und einem Überleitungskanal (412, 423, 431) zwischen jedem Schacht, die abwechselnd kohlensäurehaltige Materialien (10) durch eine Verbrennung von mindestens einem Brennstoff (20) mit mindestens einem brandfördernden Stoff (30) bis zu einem Temperaturbereich erhitzen, in dem Kohlendioxid der kohlensäurehaltigen Materialien (10) freigesetzt wird, wobei die Verbrennung des Brennstoffs und die Dekarbonisierung ein Abgas (40) erzeugen, wobei in einem alternierenden Zyklus der erste (100) Schacht in einem Verbrennungsmodus ist, der zweite Schacht (200) in einem Regenerationsmodus ist und der dritte Schacht (300) in einem Kühlmodus ist, wobei die kohlensäurehaltigen Materialien (10) in dem Regenerationsmodus in dem zweiten Schacht (200) mit einem ersten Teil (41) des in dem ersten Schacht (100), der in dem Verbrennungsmodus ist, erzeugten Abgases (40) erhitzt werden, und von dem ersten Schacht (100) über den ersten (100) und zweiten Schacht (200) verbindenden Überleitungskanal (412) zu dem zweiten Schacht (200) übertragen wird, und ein Abgasstrom (45) aus dem zweiten Schacht (200) über eine Öffnung (215) austritt, die sich in den zweiten Schacht (200) öffnet und fluidisch mit einer Abgasdurchganganordnung (600) verbunden ist, wobei die dekarbonisierten Materialien (50) in dem Kühlmodus in der Abkühlzone (330) des dritten Schachts (300) mit einem Kühlstrom (90) gekühlt werden, der Dioxygen umfasst, wobei ein Abluftstrom (91), bestehend aus:
- (a) einem Teil des Kühlstroms (90),
- (b) einem zweiten Teil (42) des in dem ersten Schacht (100) erzeugten Abgases (40) von dem ersten (100) Schacht über den Überleitungskanal (431), der den ersten (100) und den dritten Schacht (300) verbindet, zu dem dritten Schacht (300) übertragen wird, und
- (c) CO₂, das aus der Dekarbonisierung der kohlensäurehaltigen Materialien (10) in dem dritten Schacht (300) resultiert, dessen Temperatur in dem Temperaturbereich ist,
über eine Öffnung (315) aus dem dritten Schacht (300) austritt, die sich in den Schacht (300) öffnet, wobei mindestens ein Teil des Abluftstroms (91) über eine Oxidationsmittel-Rückführungsdurchgangsanordnung (500) als einer oder mehrere des mindestens einen brandfördernden Stoffs (30) in den ersten Schacht (100) zurückgeführt wird.

2. Verfahren nach Anspruch 1, ferner umfassend ein Anreichern mindestens eines Teils des aus dem dritten (300) Schacht austretenden Abluftstroms (91) mit Dioxygen, bevor der Strom (91) in den ersten Schacht (100) eingespeist wird, und/oder ein Beschicken des ersten Schachts (100) mit Dioxygen über eine Sauerstoffzufuhröffnung in dem Schacht (100), wobei die Öffnung vorzugsweise in einem oberen Endabschnitt des Ofens (MSVK) angeordnet ist.

3. Verfahren nach einem der vorherigen Ansprüche, wobei der Kühlstrom (90) aus Luft oder mit Dioxygen angereicherter Luft besteht, wobei der Strom (90) mindestens 20 % Dioxygen, vorzugsweise mindestens 21 % Dioxygen, bevorzugter mindestens 30 % Dioxygen, insbesondere mindestens 40 % Dioxygen auf Trockenbasis in dem Volumen umfasst.

4. Verfahren nach einem der vorherigen Ansprüche, ferner umfassend ein Steuern des Drucks und/oder der Durchflussmenge in mindestens einem von dem zweiten Schacht (200) und/oder dem dritten Schacht (300) während des alternierenden Zyklus, um mindestens eines von Folgendem zu steuern: den ersten Teil (41) des Abgases (40), der von dem ersten Schacht (100) über den Überleitungskanal (412), der den ersten (100) und den zweiten Schacht (200) verbindet, zu dem zweiten Schacht (200) übertragen wird, den zweiten Teil (42) des Abgases, der von dem ersten (100) Schacht über den Überleitungskanal (431), der den ersten (100) und den dritten Schacht (300) verbindet, zu dem dritten Schacht (300) übertragen wird, und/oder einen Teil (92) des Kühlstroms (90), der von dem dritten (300) Schacht über den Überleitungskanal (423) zu dem zweiten Schacht (200) übertragen wird, vorzugsweise unter Verwendung von mindestens einem von Folgenden:
- einem Drosselventil (610), das sich in der Abgasdurchgangsanordnung (600) befindet,
- einem Lüfter oder einem Verdichter (510), der sich in der Durchgangsanordnung für brandfördernden Stoff (500) befindet, und/oder
- mindestens einem von Folgenden: einer oder mehrerer Drosseln (910, 920, 930), einem oder mehrerer Lüfter und/oder einem oder mehrerer Verdichter (940, 940.1, 940.2, 940.3) eines Kühlungszufuhrsystems (900), das angepasst ist, um den Kühlstrom (90) zuzuführen.

5. Verfahren nach einem der vorherigen Ansprüche, wobei ein oder das Kühlungszufuhrsystem (900) angepasst ist, um eine Kühlstrommenge zu steuern, die während des alternierenden Zyklus in den dritten Schacht zugeführt werden soll, wobei eine Zufuhr eines Kühlstroms, der in den ersten Schacht (100) zugeführt werden soll, während des alternierenden Zyklus gestoppt wird oder eine Kühlstrommenge, die in den ersten Schacht (100) zugeführt werden soll, vorzugsweise bestehend aus Luft oder einer Gaszusammensetzung, die sowohl an O₂ als auch an CO₂ verarmt ist, insbesondere mit O₂ unter 20 % und CO₂ unter 0,04 % auf einer Trockenbasis in dem Volumen, auf eine Weise gesteuert wird, dass die Kühlstrommenge, die in dem ersten Schacht (100) zugeführt werden soll, 18 Volumen-%, vorzugsweise 10 Volumen-%, der Kühlstrommenge, die in dem dritten Schacht (300) zugeführt werden soll, während des alternierenden Zyklus nicht übersteigt, optional wobei eine Zufuhr eines Kühlstroms, der in dem zweiten Schacht (200) zugeführt werden soll, während des alternierenden Zyklus gestoppt wird.

6. Verfahren nach einem der vorherigen Ansprüche, ferner umfassend ein Bereitstellen eines befeuchteten Abgasstroms (48) mit einem Speicher (1000), der mit mindestens einem Teil des Abgasstroms (45) gespeist wird, der während des alternierenden Zyklus oder in einem alternierenden nachfolgenden Zyklus aus dem zweiten Schacht (200) austritt, und optional Kühlen des mindestens einen Teils des Abgasstroms (45) in einer ersten Kühleinheit (710), insbesondere einem ersten Kondensator, um einen gekühlten Abgasstrom (46) zu bilden, der anschließend in den Speicher (1000) eingespeist wird, vorzugsweise wobei der gekühlte Abgasstrom (46) einen Wassergehalt von weniger als 10 Volumen-% aufweist.

7. Verfahren nach einem der Ansprüche 1 bis 5, vorzugsweise in Kombination mit Anspruch 6, ferner umfassend ein Speisen mindestens einer Brennstofflanze des zweiten Schachts (200) während des alternierenden Zyklus mit mindestens einem von Folgenden:
- einem ersten Lanzenabgaskühlstrom (47), der mit mindestens einem von Folgenden gebildet ist: einen anderen Teil des Abgasstroms (45), einem Teil des gekühlten Abgasstroms (46) und/oder einem Teil des befeuchteten Abgasstroms (48), oder
- einem Teil des Abluftstroms (91).

8. Verfahren nach einem der Ansprüche 1 bis 5 oder 7, vorzugsweise in Kombination mit Anspruch 6, ferner umfassend ein Speisen mindestens einer Brennstofflanze des dritten Schachtes (300) mit mindestens einem von Folgenden:
- einem zweiten Lanzenabgaskühlstrom (47'), der mit mindestens einem von Folgenden gebildet wird: einem weiteren Teil des Abgasstroms (45), einem weiteren Teil des gekühlten Abgasstroms (46) und/oder einem anderen Teil des befeuchteten Abgasstroms (48), oder
- einem weiteren Teil des Abluftstroms (91).

9. Verfahren nach einem der vorherigen Ansprüche, wobei der aus dem dritten Schacht (300) austretende Abluftstrom (91) in einer zweiten Kühleinheit (720), insbesondere einer zweiten Kondensationseinheit (720), gekühlt wird.

10. Verfahren nach einem der vorherigen Ansprüche, ferner umfassend ein fluidisches Verbinden zwischen dem dritten Schacht (300) und dem stromaufwärtigen Ende der Rückführungsdurchgangsanordnung für brandfördernden Stoff (500) während des alternierenden Zyklus über eine Verteilerventilanordnung (318), umfassend mindestens ein bewegliches Element, das eine Fluidverbindung zwischen entweder einem ersten, einem zweiten oder einem dritten Endanschluss mit mindestens einem vierten Endanschluss ermöglicht, wobei der erste Endanschluss in Fluidverbindung mit einem stromabwärtigen Ende der Rückführungsdurchgangsanordnung für brandfördernden Stoff (500) ist, der zweite Endanschluss in Fluidverbindung mit der Abgasdurchgangsanordnung (600) ist, der dritte Endanschluss in Fluidverbindung mit einem stromaufwärtigen Ende der Rückführungsdurchgangsanordnung für brandfördernden Stoff (500) ist, der mindestens eine vierte Endanschluss in Verbindung mit der Öffnung (315) in dem dritten (300) Schacht ist.

11. Verfahren nach einem der vorherigen Ansprüche, wobei der alternierende Zyklus ein erster alternierender Zyklus ist und das Verfahren ferner einen zweiten alternierenden Zyklus im Anschluss an den ersten alternierenden Zyklus und optional einen dritten alternierenden Zyklus im Anschluss an den zweiten alternierenden Zyklus umfasst, wobei in dem zweiten alternierenden Zyklus der erste (100) Schacht in dem Kühlmodus ist, der zweite (200) Schacht im Verbrennungsmodus ist und der dritte (300) Schacht im Regenerationsmodus ist, und wobei in dem dritten alternierenden Zyklus der erste (100) Schacht in dem Regenerationsmodus ist, der zweite (200) Schacht in dem Kühlmodus ist und der dritte (300) Schacht in dem Verbrennungsmodus ist.

12. Verfahren nach einem der Ansprüche 1 bis 5 oder 8 bis 11, optional in Kombination mit Anspruch 6 oder 7, wobei zumindest ein Teil des aus der Abgasdurchgangsanordnung (600) austretenden Abgases (45), des aus der ersten Kühleinheit (710) austretenden gekühlten Abgasstroms (46) oder des aus dem Speicher (1000) austretenden befeuchteten Abgasstroms (48) zumindest eines von Folgenden aufweist:
- einen CO₂-Gehalt zwischen 40 % und 60 %, insbesondere zwischen 45 % und 55 %, bezogen auf eine Trockenbasis, und/oder
- einen CO₂-Gehalt von weniger als 4 %, vorzugsweise weniger als 3 %, insbesondere weniger als 2 Volumen-%, bezogen auf eine Trockenbasis.

13. Verfahren nach einem der Ansprüche 1 bis 5 oder 8 bis 12 in Kombination mit Anspruch 6 oder 7, ferner umfassend das Aufreinigen in CO₂ von mindestens einem von Folgenden: dem aus der Abgasdurchgangsanordnung (600) austretenden mindestens einen Teil des Abgases (45), dem aus der ersten Kühleinheit (710) austretenden gekühlten Abgasstrom (46) und/oder dem aus dem Speicher (1000) austretenden befeuchteten Abgasstrom (48), in mindestens einer CO₂-Abscheidereinheit, wodurch ein CO₂-abgereicherter Strom und ein CO₂-angereicherter Strom gebildet werden, vorzugsweise mit einem CO₂-Gehalt von mehr als oder gleich wie 95 Volumen-%, bezogen auf eine Trockenbasis, vorzugsweise wobei die mindestens eine CO₂-Abscheidereinheit ausgewählt ist aus der Gruppe, umfassend eine Membranabscheidereinheit, vorzugsweise eine einstufige Membranabscheidereinheit, eine kryogene Abscheidereinheit, eine Druckwechselabsorptionseinheit und/oder eine Aminwascheinheit.

14. Mehrschachtofen (MSVK), umfassend einen ersten (100), einem zweiten (200) und einen dritten Schacht (300) mit Vorwärmzonen (110, 210, 310), Heizzonen (120, 220, 320) und Abkühlzonen (130, 230, 330) und einem Überleitungskanal (412, 423, 432) zwischen jedem Schacht (100, 200, 300), wobei der Ofen (MSVK) zur Durchführung des Verfahrens nach einem der vorherigen Ansprüche angepasst ist, der Ofen (MSVK) umfassend:
- ein Kühlungszufuhrsystem (900) zum Kühlen eines der Schächte, wobei dieser Schacht in einem Kühlmodus ist;
- eine Rückführungsdurchgangsanordnung für brandfördernden Stoff (500) zum Übertragen mindestens eines Teils eines Abluftstroms (91) von einem der Schächte in dem Kühlmodus zu einem anderen der Schächte, wobei der Schacht in einem Verbrennungsmodus ist;
- optional einen Umluftlüfter oder einen Verdichter (510), der in der Rückführungsdurchgangsanordnung für brandfördernden Stoff (500) angeordnet ist, um den mindestens einen Teil des Abluftstroms (91) umzuwälzen;
- eine Abgasdurchgangsanordnung (600) zum Ableiten eines Abgasstroms (45) von dem verbleibenden der Schächte, wobei der Schacht in einem Regenerationsmodus ist,
- wobei mindestens ein Schacht (100, 200, 300), vorzugsweise jeder Schacht (100, 200, 300), mit einer Verteilerventilanordnung (118, 218, 318) verbunden ist, wobei die Anordnung (118, 218, 318) eine Verteilerventilanordnung (118, 218, 318) umfasst, umfassend mindestens ein bewegliches Element, das eine Fluidverbindung zwischen entweder einem ersten, einem zweiten oder einem dritten Endanschluss mit mindestens einem vierten Endanschluss ermöglicht, wobei der erste Endanschluss in Fluidverbindung mit einem stromabwärtigen Ende der Rückführungsdurchgangsanordnung für brandfördernden Stoff (500) ist, der zweite Endanschluss in Fluidverbindung mit der Abgasdurchgangsanordnung (600) ist, der dritte Endanschluss in Fluidverbindung mit einem stromaufwärtigen Ende der Rückführungsdurchgangsanordnung für brandfördernden Stoff (500) ist, wobei der mindestens eine vierte Endanschluss mit mindestens einer Öffnung (115, 215, 315) in dem entsprechenden Schacht in Verbindung ist.

15. Mehrschachtofen (MSVK) nach dem vorherigen Anspruch, wobei die Verteilerventilanordnung (118, 218, 318) eines von Folgenden umfasst:
- eine 3-Wege-Ventilanordnung, die einen stromaufwärtigen Anschluss in Fluidverbindung mit einer der mindestens einen Öffnung (115, 215, 315) aufweist, die sich in den entsprechenden Schacht öffnet, wobei der zweite Endanschluss in Fluidverbindung mit der Abgasdurchgangsanordnung (600) ist und der dritte Endanschluss in Fluidverbindung mit dem stromaufwärtigen Ende der Rückführungsdurchgangsanordnung für brandfördernden Stoff (500) ist, wobei ein bewegliches Element der 3-Wege-Ventilanordnung eine Fluidverbindung zwischen dem stromaufwärtigen Anschluss und entweder dem zweiten Endanschluss oder dem dritten Endanschluss ermöglicht,
- eine Doppelventilanordnung, umfassend ein erstes und ein zweites 2-Wege-Ventil, wobei die Ventilanordnung einen gemeinsamen stromaufwärtigen Anschluss in Fluidverbindung mit einer der mindestens einen Öffnung (115, 215, 315) in dem entsprechenden Schacht, dem zweiten Endanschluss, der fluidisch mit dem ersten 2-Wege-Ventil verbunden ist und in Strömungsverbindung mit der Abgasdurchgangsanordnung (600) ist, und dem dritten Endanschluss, der fluidisch mit dem zweiten 2-Wege-Ventil verbunden ist und in Strömungsverbindung mit dem stromaufwärtigen Ende der Oxidationsmittel-Rückführungsdurchgangsanordnung (500) ist, aufweist, wobei ein erstes und ein zweites bewegliches Element in dem ersten bzw. dem zweiten 2-Wege-Ventil eine fluidische Verbindung zwischen dem gemeinsamen stromaufwärtigen Anschluss und entweder dem zweiten Endanschluss oder dem dritten Endanschluss ermöglichen, oder
- eine geteilte Ventilanordnung, umfassend ein erstes und ein zweites 2-Wege-Ventil, wobei die Anordnung einen ersten stromaufwärtigen Anschluss und einen zweiten stromaufwärtigen Anschluss in Fluidverbindung mit einer ersten und einer zweiten der mindestens einen Öffnung (115, 215, 315), die sich in der entsprechenden Schacht öffnen, aufweist, wobei der zweite Endanschluss in Fluidverbindung mit dem ersten 2-Wege-Ventil und in Fluidverbindung mit der Abgasdurchgangsanordnung (600) ist und der dritte Endanschluss fluidisch mit dem zweiten 2-Wege-Ventil verbunden ist und fluidisch mit dem stromaufwärtigen Ende der Oxidationsmittel-Rückführungsdurchgangsanordnung (500) verbunden ist, wobei ein erstes und ein zweites bewegliches Element jeweils in dem ersten und dem zweiten 2-Wege-Ventil eine Fluidverbindung zwischen dem ersten stromaufwärtigen Anschluss und dem zweiten Endanschluss ermöglichen, während die Fluidverbindung zwischen dem zweiten stromaufwärtigen Anschluss und dem dritten Endanschluss geschlossen ist, und umgekehrt.

## Revendications

1. Procédé de décarbonatation pour matériaux carbonés (10), en particulier minéraux carbonés, de préférence calcaires et/ou calcaires dolomitiques, dans un four vertical à arbres multiples (MSVK) comprenant un premier (100), un deuxième (200) et un troisième arbre (300) avec des zones de préchauffage (110, 210, 310), des zones de chauffage (120, 220, 320) et des zones de refroidissement (130, 230, 330) et un canal de croisement (412, 423, 431) entre chaque arbre, chauffant en alternance des matériaux carbonés (10) par la combustion d'au moins un combustible (20) avec au moins un comburant (30) jusqu'à une plage de températures dans laquelle le dioxyde de carbone des matériaux carbonés (10) est libéré, la combustion du combustible et la décarbonatation générant un gaz d'échappement (40), **caractérisé en ce que** dans un cycle alterné, le premier arbre (100) est dans un mode de combustion, le deuxième arbre (200) est dans un mode de régénération et le troisième arbre (300) est dans un mode de refroidissement, **en ce que** en mode régénération, les matériaux carbonés (10) du deuxième arbre (200) sont chauffés avec une première partie (41) du gaz d'échappement (40) généré dans le premier arbre (100) en mode combustion et transférée du premier arbre (100) vers le deuxième arbre (200) via le canal de croisement (412) raccordant le premier (100) et le deuxième arbre (200), et un flux de gaz d'échappement (45) sort du deuxième arbre (200) par une ouverture (215), s'ouvrant dans le deuxième arbre (200) et raccordée de manière fluide à un ensemble pour le passage d'échappement (600), **en ce que** en mode refroidissement, les matériaux décarbonatés (50) sont refroidis dans la zone de refroidissement (330) du troisième arbre (300) avec un flux de refroidissement (90) comprenant du dioxygène, dans lequel un flux d'effluent (91) composé :
- (a) d'une partie du flux de refroidissement (90),
- (b) d'une deuxième partie (42) du gaz d'échappement (40) généré dans le premier arbre (100) transférée du premier arbre (100) vers le troisième arbre (300) via le canal de croisement (431) qui raccorde le premier (100) et le troisième arbre (300) et
- (c) du CO₂ résultant de la décarbonatation des matériaux carbonés (10) dans le troisième arbre (300), dont la température se situe dans la plage de températures,
sort du troisième arbre (300) par une ouverture (315) s'ouvrant dans ledit arbre (300), **en ce que** au moins une partie du flux d'effluent (91) est remise en circulation dans le premier arbre (100) via un ensemble pour le passage de recirculation de comburant (500), comme un ou plusieurs de l'au moins un comburant (30).

2. Procédé selon la revendication 1, comprenant en outre l'enrichissement en dioxygène de l'au moins une partie du flux d'effluent (91) sortant du troisième arbre (300) avant d'alimenter le premier arbre (100) avec ledit flux (91) et/ou la fourniture de dioxygène au premier arbre (100) par un orifice de fourniture d'oxygène s'ouvrant dans ledit arbre (100), ledit orifice étant de préférence agencé dans une partie d'extrémité supérieure dudit four (MSVK).

3. Procédé selon l'une quelconque des revendications précédentes, **caractérisé en ce que** le flux de refroidissement (90) est composé d'air ou d'air enrichi en dioxygène, et **en ce que** ledit flux (90) comprend au moins 20 % de dioxygène, de préférence au moins 21 % de dioxygène, plus préférablement au moins 30 % de dioxygène, en particulier au moins 40 % de dioxygène sur une base sèche en volume.

4. Procédé selon l'une quelconque des revendications précédentes, comprenant en outre le réglage de la pression et/ou du débit dans au moins l'un du deuxième arbre (200) et/ou du troisième arbre (300) au cours du cycle alterné afin de régler au moins l'une parmi : la première partie (41) du gaz d'échappement (40) transféré du premier arbre (100) vers le deuxième arbre (200) par le canal de croisement (412) raccordant le premier (100) et le deuxième arbre (200), la deuxième partie (42) du gaz d'échappement transféré du premier arbre (100) vers le troisième arbre (300) par le canal de croisement (431) raccordant le premier (100) et le troisième arbres (300) et/ou une partie (92) du flux de refroidissement (90) transféré du troisième arbre (300) vers le deuxième arbre (200) par le canal de croisement (423), de préférence à l'aide d'au moins l'une parmi :
- une vanne d'étranglement (610) située dans l'ensemble pour le passage d'échappement (600),
- un ventilateur ou un compresseur (510) situé dans l'ensemble pour le passage de comburant (500) et/ou
- au moins l'un parmi : un ou plusieurs étranglements (910, 920, 930), un ou plusieurs ventilateurs et/ou un ou plusieurs compresseurs (940, 940.1, 940.2, 940.3) d'un système de refroidissement (900) adapté pour fournir le flux de refroidissement (90).

5. Procédé selon l'une quelconque des revendications précédentes, **caractérisé en ce que** un ou le système de refroidissement (900) est adapté pour régler une quantité de flux de refroidissement à fournir dans le troisième arbre lors du cycle alterné, **en ce que** une alimentation d'un flux de refroidissement à fournir dans le premier arbre (100) est interrompue lors du cycle alterné ou une quantité de flux de refroidissement à fournir dans le premier arbre (100), consistant de préférence en air ou en composition gazeuse appauvrie à la fois en O₂ et en CO₂, en particulier avec de l'O₂ inférieur à 20 % et avec du CO₂ inférieur à 0,04 % sur une base sèche en volume, est réglée de telle manière que la quantité de flux de refroidissement à fournir dans le premier arbre (100) ne dépasse pas 18 %, de préférence 10 %, en volume de la quantité du flux de refroidissement à fournir dans le troisième arbre (300) lors du cycle alterné, éventuellement une alimentation d'un flux de refroidissement à fournir dans le deuxième arbre (200) étant interrompue lors du cycle alterné.

6. Procédé selon l'une quelconque des revendications précédentes, comprenant en outre la fourniture d'un flux de gaz d'échappement réduit (48) à un réservoir (1000) alimenté avec au moins une partie du flux de gaz d'échappement (45) sortant du deuxième arbre (200) au cours du cycle alterné ou dans un cycle alterné ultérieur, et éventuellement le refroidissement de l'au moins une partie du flux de gaz d'échappement (45) dans une première unité de refroidissement (710), en particulier un premier condenseur, pour former un flux de gaz d'échappement refroidi (46) ultérieurement introduit dans le réservoir (1000), de préférence ledit flux de gaz d'échappement refroidi (46) présentant une teneur en eau inférieure à 10 % en volume.

7. Procédé selon l'une quelconque des revendications 1 à 5, de préférence en combinaison avec la revendication 6, comprenant en outre l'alimentation d'au moins une lance à combustible du deuxième arbre (200) pendant le cycle alterné avec au moins l'un parmi :
- un premier flux de refroidissement de gaz d'échappement de lance (47) formé d'au moins l'une parmi : une autre partie du flux de gaz d'échappement (45), une partie du flux de gaz d'échappement refroidi (46) et/ou une partie du flux de gaz d'échappement réduit (48), ou
- une partie du flux d'effluent (91).

8. Procédé selon l'une quelconque des revendications 1 à 5 ou 7, de préférence en combinaison avec la revendication 6, comprenant en outre l'alimentation d'au moins une lance à combustible du troisième arbre (300) avec au moins l'un parmi :
- un deuxième flux de refroidissement de gaz d'échappement de lance (47') formé d'au moins l'une parmi : une partie supplémentaire du flux de gaz d'échappement (45), une partie supplémentaire du flux de gaz d'échappement refroidi (46) et/ou une autre partie du flux de gaz d'échappement réduit (48) ou
- une partie supplémentaire du flux d'effluent (91).

9. Procédé selon l'une quelconque des revendications précédentes, comprenant en outre le refroidissement du flux d'effluent (91) sortant du troisième arbre (300) dans une deuxième unité de refroidissement (720), en particulier une deuxième unité de condensation (720).

10. Procédé selon l'une quelconque des revendications précédentes, comprenant en outre un raccordement fluide du troisième arbre (300) et de l'extrémité amont de l'ensemble pour le passage de recirculation de comburant (500) pendant le cycle alterné par un agencement de vannes de distribution (318) comprenant au moins un élément mobile permettant une communication fluide entre l'un ou l'autre d'un premier, d'un deuxième ou d'un troisième orifice d'extrémité, avec au moins un quatrième orifice d'extrémité, ledit premier orifice d'extrémité étant en communication fluide avec une extrémité aval de l'ensemble pour le passage de recirculation de comburant (500), le deuxième orifice d'extrémité étant en communication fluide avec l'ensemble pour le passage d'échappement (600), le troisième orifice d'extrémité étant en communication fluide avec une extrémité amont de l'ensemble pour le passage de recirculation de comburant (500), l'au moins un quatrième orifice d'extrémité étant en communication avec l'ouverture (315) dans le troisième arbre (300).

11. Procédé selon l'une quelconque des revendications précédentes, **caractérisé en ce que** le cycle alterné est un premier cycle alterné, et ledit procédé comprend en outre un deuxième cycle alterné ultérieur audit premier cycle alterné et éventuellement un troisième cycle alterné ultérieur audit deuxième cycle alterné, **caractérisé en ce que** dans ledit deuxième cycle alterné, le premier arbre (100) est en mode refroidissement, le deuxième arbre (200) est en mode combustion, et le troisième arbre (300) est en mode régénération, et **en ce que** dans ledit troisième cycle alterné, le premier arbre (100) est en mode régénération, le deuxième arbre (200) est en mode refroidissement et le troisième arbre (300) est en mode combustion.

12. Procédé selon l'une quelconque des revendications 1 à 5 ou 8 à 11, éventuellement en combinaison avec la revendication 6 ou 7, **caractérisé en ce que** l'au moins une partie de gaz d'échappement (45) sortant de l'ensemble pour le passage d'échappement (600), le flux de gaz d'échappement refroidi (46) sortant de la première unité de refroidissement (710) ou le flux de gaz d'échappement réduit (48) sortant du réservoir (1000) présente au moins l'une parmi :
- une teneur en CO₂ entre 40 % et 60 %, en particulier entre 45 % et 55 %, en volume sur une base sèche et/ou
- une teneur en O₂ inférieure à 4 %, de préférence inférieure à 3 %, en particulier inférieure à 2 % en volume sur une base sèche.

13. Procédé selon l'une quelconque des revendications 1 à 5 ou 8 à 12 en combinaison avec la revendication 6 ou 7, comprenant en outre la purification en présence de CO₂ d'au moins l'un parmi: l'au moins une partie de gaz d'échappement (45) sortant de l'ensemble pour le passage d'échappement (600), le flux de gaz d'échappement refroidi (46) sortant de la première unité de refroidissement (710) et/ou le flux de gaz d'échappement réduit (48) sortant du réservoir (1000), dans au moins une unité de séparation de CO₂, formant ainsi un flux appauvri en CO₂ et un flux enrichi en CO₂, présentant de préférence une teneur en CO₂ supérieure ou égale à 95 % en volume sur une base sèche, de préférence l'au moins une unité de séparation de CO₂ étant sélectionnée parmi le groupe comprenant une unité de séparation membranaire, de préférence une unité de séparation membranaire à étage unique, une unité de séparation cryogénique, une unité d'absorption modulée en pression et/ou une unité de lavage aux amines.

14. Four vertical à arbres multiples (MSVK) comprenant un premier (100), un deuxième (200) et un troisième arbres (300) avec des zones de préchauffage (110, 210, 310), des zones de chauffage (120, 220, 320) et des zones de refroidissement (130, 230, 330) et un canal de croisement (412, 423, 432) entre chaque arbre (100, 200, 300), ledit four (MSKV) étant adapté pour mettre en œuvre le procédé selon l'une quelconque des revendications précédentes, ledit four (MSVK) comprenant :
- un système de refroidissement (900) pour refroidir l'un des arbres, ledit arbre étant dans un mode de refroidissement ;
- un ensemble pour le passage de recirculation de comburant (500) pour transférer au moins une partie d'un flux d'effluent (91) de l'un des arbre en mode refroidissement vers un autre des arbres, ledit arbre étant en mode combustion ;
- éventuellement un ventilateur de recirculation ou un compresseur (510) agencé dans l'ensemble pour le passage de recirculation de comburant (500) pour faire circuler l'au moins une partie du flux d'effluent (91) ;
- un ensemble pour le passage d'échappement (600) pour décharger un flux de gaz d'échappement (45) sortant de l'arbre restant, ledit arbre étant en mode régénération,
**caractérisé en ce que** au moins un arbre (100, 200, 300), de préférence chaque arbre (100, 200, 300), est raccordé à un agencement de vannes de distribution (118, 218, 318), ledit agencement (118, 218, 318) comprenant un agencement de vannes de distribution (118, 218, 318) comprenant au moins un élément mobile permettant une communication fluide entre l'un ou l'autre d'un premier, d'un deuxième ou d'un troisième orifice d'extrémité, avec au moins un quatrième orifice d'extrémité, ledit premier orifice d'extrémité étant en communication fluide avec une extrémité aval de l'ensemble pour le passage de recirculation de comburant (500), le deuxième orifice d'extrémité étant en communication fluide avec l'ensemble pour le passage d'échappement (600), le troisième orifice d'extrémité étant en communication fluide avec une extrémité amont de l'ensemble pour le passage de recirculation de comburant (500), l'au moins un quatrième orifice d'extrémité étant en communication avec au moins une ouverture (115, 215, 315) s'ouvrant dans l'arbre correspondant.

15. Four vertical à arbres multiples (MSVK) selon la revendication précédente, **caractérisé en ce que** l'agencement de vannes de distribution (118, 218, 318) comprend soit :
- un ensemble vannes à 3 voies présentant un orifice amont en communication fluide avec une de l'au moins une ouverture (115, 215, 315) s'ouvrant dans l'arbre correspondant, le deuxième orifice d'extrémité en communication fluide avec l'ensemble pour le passage d'échappement (600) et le troisième orifice d'extrémité en communication fluide avec l'extrémité amont de l'ensemble pour le passage de recirculation de comburant (500), **caractérisé en ce que** un élément mobile de l'ensemble vannes à 3 voies permet une communication fluide entre l'orifice amont et l'un ou l'autre dudit deuxième orifice d'extrémité ou dudit troisième orifice d'extrémité,
- un ensemble double vanne comprenant une première et une deuxième vannes à deux voies, ledit ensemble de vannes présentant un orifice amont commun en communication fluide avec une de l'au moins une ouverture (15, 215, 315) s'ouvrant dans l'arbre correspondant, le deuxième orifice d'extrémité raccordé de manière fluide à ladite vanne à 2 voies et en communication fluide avec l'ensemble pour le passage d'échappement (600) et le troisième orifice d'extrémité raccordé de manière fluide à ladite deuxième vanne à 2 voies et en communication fluide avec l'extrémité amont de l'ensemble pour le passage de recirculation de comburant (500), **caractérisé en ce qu'**un premier et un deuxième éléments mobiles dans la première et la deuxième vannes à 2 voies, respectivement, permettent une communication fluide entre l'orifice amont commun et l'un ou l'autre dudit deuxième orifice d'extrémité ou dudit troisième orifice d'extrémité, ou
- un ensemble vanne de répartition comprenant une première et une deuxième vannes à 2 voies, ledit ensemble présentant un premier orifice amont et un deuxième orifice amont en communication fluide avec une première et une deuxième de l'au moins une ouverture (115, 215, 315) s'ouvrant dans l'arbre correspondant, le deuxième orifice d'extrémité étant raccordé de manière fluide à ladite première vanne à deux voies et en communication fluide avec l'ensemble pour le passage d'échappement (600) et le troisième orifice d'extrémité étant raccordé de manière fluide à ladite deuxième vanne à 2 voies et en communication fluide avec l'extrémité amont de l'ensemble pour le passage de recirculation de comburant (500), **caractérisé en ce qu'**un premier et un deuxième éléments mobiles dans la première et la deuxième vannes à 2 voies, respectivement, permettent une communication fluide entre le premier orifice amont et ledit deuxième orifice d'extrémité tandis que la communication fluide entre le deuxième orifice amont et ledit troisième orifice d'extrémité est fermée, et vice versa.
